(19) Europäisches Patentamt
European Patent Office
Office européen des brevets

(11) **EP 1 278 332 B1**

(12) **EUROPÄISCHE PATENTSCHRIFT**

(45) Veröffentlichungstag und Bekanntmachung des Hinweises auf die Patenterteilung:
**23.11.2005 Patentblatt 2005/47**

(51) Int Cl.⁷: **H04L 9/32**, G07B 17/00

(21) Anmeldenummer: **02090250.8**

(22) Anmeldetag: **12.07.2002**

(54) **Verfahren und System zur Echtzeitaufzeichnung mit Sicherheitsmodul**

Method and system for real time recording with security module

Procédé et dispositif d'enregistrement en temps réel avec module de sécurité

(84) Benannte Vertragsstaaten:
**CH DE FR GB IT LI**

(30) Priorität: **16.07.2001 DE 10136608**

(43) Veröffentlichungstag der Anmeldung:
**22.01.2003 Patentblatt 2003/04**

(73) Patentinhaber: **Francotyp-Postalia AG & Co. KG
16547 Birkenwerder (DE)**

(72) Erfinder:
• **Bleumer, Gerrit
16552 Schildow (DE)**
• **Heinrich, Clemens
10717 Berlin (DE)**

(56) Entgegenhaltungen:
DE-A- 19 948 319      GB-A- 2 293 737

• **B. SCHNEIER ET AL. : "Secure Audit Logs to Support Computer Forensics" ACM TRANSACTIONS ON INFORMATION AND SYSTEM SECURITY, Bd. 2, Nr. 2, Mai 1999 (1999-05), Seiten 159-176, XP002256979**

**Beschreibung**

Die Erfindung betrifft ein Verfahren zur Echtzeitaufzeichnung mit hoher Fälschungssicherheit, gemäß der im Oberbegriff des Anspruchs 1 angegebenen Art und ein System mit einem Sicherheitsmodul, gemäß der im Oberbegriff des Anspruchs 10 angegebenen Art. Ein solcher Sicherheitsmodul arbeitet in einer potentiell nicht vom Betreiber kontrollierten Umgebung, z.B. in Servern, in Geldautomaten, Fahrkartenautomaten, Frankiermaschinen, Registrierkassen, elektronischen Geldbörsen, Computern für den persönlichen Gebrauch (Palmtops, Notebooks, Organizers), Handys und Geräten, die mehrere dieser Funktionalitäten kombinieren. Er kann in Form eines postalischen Sicherheitsmoduls realisiert werden, welches insbesondere für den Einsatz in Servern, in Frankiermaschinen bzw. Postbearbeitungsmaschinen, PC-Frankierern oder Computern geeignet ist.

Bei der Postbearbeitung, bei welcher ebenfalls eine hohe Fälschungssicherheit gefordert wird, kommen bereits kryptographische Sicherheitsmaßnahmen bei der Erzeugung einer für jeden Frankierabdruck einzigartigen Markierung zum Einsatz.

Unter dem Titel: "Method and arrangement for generating and checking a security imprint" wurde bereits in der US 5.953.426 ein spezielles Secret Key Verfahren vorgeschlagen. Der geheime Schlüssel (Secret Key) wird in einer sicheren Datenbank an der Verifizierungsstelle, typischerweise bei der Postbehörde, aufgehoben und damit geheim gehalten. Aus den Daten einer zu übermittelnden Botschaft wird ein Data Authentication Code (DAC) gebildet, der in eine Markierungssymbolreihe umgesetzt wird, welche dann zur Authentifikationsprüfung der Botschaft verwendet werden kann. Dabei wird der aus der US 3,962,539 bekannte Data Encryption Standard (DES)-Algorithmus angewendet. Letzterer ist der bekannteste symmetrische Kryptoalgorithmus und wird auch in FIPS PUB 113 (Federal Information Processing Standards Publication) beschrieben. Die Symbole der Markierungssymbolreihe sind Ziffern oder Buchstaben bzw. Sonderzeichen. Die offen abgedruckten Informationen und der DAC im OCR-lesbaren Abschnitt des Druckbildes sind damit visuell (human) und maschinenlesbar. Mit einem symmetrischen Kryptoalgorithmus lassen sich bei Daten des o.g. DAC oder bei Mitteilungen ein Message Authentifications Code (MAC) erzeugen, wobei solche Code zur Authentifikationsprüfung verwendet werden, ähnlich einer digitalen Unterschrift. Der Vorteil des symmetrischen Kryptoalgorithmus besteht in der relativ geringen Länge des MAC und in der hohen Geschwindigkeit seiner Berechnung. Diesen Vorteil steht der Nachteil gegenüber, dass Sender und Empfänger einen einzigen geheimen Schlüssel nutzen.

Der Vorteil eines asymmetrischen Kryptoalgorithmuses wird durch einen öffentlichen Schlüssel begründet. Ein bekannter asymmetrischer Kryptoalgorithmus, der nach den Namen seiner Erfinder R.Rivest, A.Shamir und L.Adleman benannt und im US 4,405,829 beschrieben wurde, ist der RSA-Algorithmus.

Bekanntlich entschlüsselt der Empfänger mit einem privaten geheimen Schlüssel eine verschlüsselte Nachricht, welche beim Sender mit dem zugehörigen öffentlichen Schlüssel verschlüsselt wurde. Der Empfänger hält seinen privaten Schlüssel geheim, aber verschickt den zugehörigen öffentlichen Schlüssel an potentielle Absender. RSA ist ein asymmetrisches Verfahren, das sich sowohl zur Schlüsselübermittlung als auch auch zur Erstellung digitaler Unterschriften eignet. Mit dem privaten Schlüssel lassen sich digitale Unterschriften erzeugen, wobei die öffentlichen Schlüssel zur Verifikation der Signatur dienen. Jeder digitale Signatur-Algorithmus benutzt zwei Schlüssel, wobei einer der beiden Schlüssel öffentlich ist. Eine Implementation des RSA-basierten Signaturalgorithmus in einem Computer ergibt eine vergleichsweise langsame Abarbeitung und liefert eine lange Signatur.

Es wurde schon ein Digital Signatur Standard (DSS) entwickelt, der eine kürzere digitale Unterschrift liefert und zu dem der Digital Signatur Algorithm (DSA) nach US 5,231,668 gehört. Diese Entwicklung erfolgte ausgehend von der Identifikation und Signatur gemäß dem Schnorr-Patent US 4,995,085 und ausgehend vom Schlüsseltausch nach Diffie-Hellman US 4,200,770 bzw. vom ElGamal-Verfahren (El Gamal, Taher, "A Public Key Cryptosystem and a Signatur Scheme Based on Diskrete Logarithms",IEEE Transactions and Information Theory, vol. 31, No. 4, Jul.1985). Beim asymmetrischen Kryptoalgorithmus steht dem Vorteil des Verwendens eines öffentlichen Schlüssels der Nachteil einer relativ langen digitalen Unterschrift gegenüber.

In der US 6.041.704 wurde unter dem Titel: "Methode for operating a digitally printing postage meter to generate and check a security imprint" vorgeschlagen, ein modifiziertes Public Key-Verfahren für eine kürzere Signatur zu verwenden. Jedoch ist nur mit außerordentlich schnellen Prozessoren eine außerordentlich lange andauernde Datenverarbeitung zu vermeiden. Um den geheimen privaten Schlüssel vor einem Diebstahl aus einem Computer oder aus einer Frankiermaschine zu schützen, muss ein Sicherheitsbereich geschaffen werden, denn die gesamte Sicherheit der Signatur beruht darauf, dass der private Schlüssel nicht bekannt wird. Der öffentliche Schlüssel könnte dagegen in einer Vielzahl von Postinstitutionen zur Überprüfung der Signatur verwendet werden.

Ein solcher Sicherheitsbereich wird in Geräten durch einen Sicherheitsmodul geschaffen. In dem von der Deutschen Post AG in der Schrift "Voraussetzungen zur Einführung von Systemen zur PC-Frankierung" mitgeteilten Stand vom 26.April 2000 wird davon ausgegangen, dass jedes Gerät im System einen Sicherheitsmodul hat. Dabei wird lediglich ein asymmetrisches Schlüsselpaar nach RSA sowohl für die asymmetrische Verschlüsselung als auch für die digitale Signatur eingesetzt. Die Schlüssellänge beträgt 1024 bit nach RSA und es wird mit dem öffentlichen Schlüssel des Empfänger-Sicherheitsmoduls verschlüsselt. Für die digitale Signatur wird ein Hashwert nach SHA-1 für sendungsspezifische Daten und eine Zufallszahl erzeugt und mit dem Sicherheitsmodul-eigenen privaten Schlüssel verschlüsselt. Es können jedoch jeweils nur zwei Sicherheitsmodule miteinander kommunizieren. Außerdem existiert weiterhin der bei einem asymmetrischen Kryptoalgorithmus auftretende Nachteil einer relativ langen digitalen Unterschrift. Das bedeutet gegenüber einem relativ kurzen MAC bei einem symmetrischen Kryptoalgorithmus, eine Verlängerung der Zeit für die Berechnung und Kommunikation, insbesondere da zu jeder RSA-Verschlüsselung von Daten zusätzlich eine Signatur erzeugt wird.

Die Berechnung einer Hash-Funktion erfolgt dagegen sogar um zwei bis vier Größenordnungen schneller als die Berechnung der digitalen Signatur oder der asymmetrischen Verschlüsselung. Bei den in der Kryptografie genutzten Einweg-Hashfunktionen ist es nahezu unmöglich eine andere Bytefolge zu finden, die denselben Hashwert ergibt. Die Einweg-Hashfunktionen sollen generell nicht umkehrbar sein. Eine von Ron Rivest im Jahre 1991 entwickelte Einweg-Hashfunktionen MD5 hat einen 128 Bit langen Hashwert soll aber nicht so sicher sein wie MD160 oder SHA-1 (Secure Hash Algorithm). Die beiden letzteren verwenden einen 160-Bit Hashwert. Der SHA-1 wurde vom NIST unter Mitwirkung der NSA entwickelt und im Jahre 1994 publiziert. Der SHA-1 ist Bestandteil des DSA.

Aus der US 4,812,965 ist bereits ein System für eine Fern-Inspektion bekannt geworden, welche das Erfordernis einer lokalen Inspektion reduziert. Jede Fälschungshandlung wird von einer Frankiermaschine aufgezeichnet und zu einer zentralen Station übermittelt, indem ein Information ausgedruckt und versandt bzw. via Modem zur zentralen Station gesendet wird.

In Frankiermaschinen kommen bereits kryptographische Sicherheitsmaßnahmen sowohl bei einer Datenübertragung zur Datenzentrale als auch bei der Erzeugung einer Aufzeichnung im Zusammenhang mit der Buchung eines jeden Frankierabdruckes zum Einsatz (US 5.671.146, US 5.771.348, US 5.805.711). In Frankiermaschinen vom Typ JetMail® der Anmelderin werden bereits ein Sicherheitsmodul und ein Verfahren zur Sicherung der Postregister vor Manipulation eingesetzt, welches auf einer MAC-Bildung über die Postregisterdaten basiert (EP 1.063.619 A1). Obwohl bei den vorgenannten Lösungen schon kryptographische Methoden angewandt werden, betreffen erstere noch keine Echtzeitaufzeichnung. Da es keine 100%ige Sicherheit gegen Fälschungsangriffe gibt, wird eine Aufzeichnung der Autorisierungsaktivitäten eines Sicherheitsmoduls auf einem authentischen unfälschbaren Wege erforderlich.

Eine Protokolldatei, welche eine historische Aufzeichnung aller Transaktionsdaten umfaßt, wird nachfolgend Translogfile genannt. Die Rechenkapazität und Rechengeschwindigkeit von Frankiermaschinen ist meist auf eine Lösung zur Erzeugung eines Translogfile in grober Granularität beschränkt, wobei nicht die Daten jeder einzelnen Transaktion sondern nur die einer Gruppe von Transaktionsdaten mit einer digitalen Signatur gesichert werden. Wenn jeder Eintrag des Translogfiles mit einer digitalen Signatur gesichert würde, wäre die benötigte Frankiergeschwindigkeit unter Umständen schwer realisierbar. Ein Kompromiß kann zwischen der Durchführbarkeit und Granularität gefunden werden, wenn die Größe der Transaktionsdaten in geeigneter Weise begrenzt wird.

Aus der US 6.061.671 ist es bekannt, eine kryptographisch geschützte Kopie von Abrechnungsdaten in einem Speicher extern vom Sicherheitsmodul ("secure value metering unit") zu speichern. Die so protokollierten Abrechnungsdaten sind auf wenige ausgewählte Registerdaten begrenzt. Für eine Echtzeitverarbeitung kann bei Anwendung eines symmetrischen Kryptoalgoritmus die Rechengeschwindigkeit von Frankiermaschinen ausreichen. An jede Nachricht mit Transaktionsdaten könnte also ein Message Authentication Code (MAC) angehängt werden. Dieser Weg ist aber nur für eine Übermittlung zu einer einzigen Institution gangbar, welche die Echtheitsprüfung durchführt. Wenn zwei Institutionen sich gegenseitig nicht vertrauen, können beide nicht mit dem gleichen Geheimschlüssel ausgestattet werden. Bei mehreren Institutionen wächst die potentielle Gefahr der Ausspähung des Geheimschlüssels, wenn sie mit dem gleichen Geheimschlüssel ausgestattet sind, der für jeden Sicherheitsmodul einzigartig ist.

Es wurde bereits vorgeschlagen, für einen Sicherheitsabdruck zwei Verschlüsselungscode zu generieren (US 5.390.251). Bei mehreren unterschiedlichen und voneinander unabhängigen Institutionen müsste folglich für jede der vorgenannten Institutionen, ein anderer einzigartiger Geheimschlüssel gespeichert und eine separate Aufzeichnung erzeugt werden. Das macht diesen Lösungsansatz für eine Echtzeitverarbeitung bei Übertragung an dritte Institutionen uneffizient.

Bei einer Frankiermaschine vom Typ JetMail® wird bereits ein Sicherheitsmodul eingesetzt, das einen symmetrischen Kryptoalgorithmus nutzt (EP 1.035.513 A2, EP 1.035.516 A2, EP 1.035.517 A2, EP 1.035.518 A2). Eine Schlüsselübertragung zwischen Datenzentrale und Sicherheitsmodul erfolgt in einem verschlüsselten Datensatz, welcher außerdem MACgesichert ist. Eine Kommunikation mit einer weiteren Institution ist aber nicht vorgesehen. Bei mehreren unterschiedlichen und voneinander unabhängigen Institutionen müsste für jede der vorgenannten ein individueller MAC produziert werden. Das würde aber die zu übertragenden bzw. in Echtzeit aufzuzeichnende Datenmenge erheblich vergrößern, wenn für jede Institution (zum Beispiel für eine Verifikationszentrale des Herstellers und für eine Verifikationszentrale des Postdienstes) eine individuelle Aufzeichnung erzeugt wird.

Aus der Literatur B. SCHNEIER ET AL.: "Secure Audit Logs to Support Computer Forensics" ACM TRANSACTIONS ON INFORMATION AND SYSTEM SECURITY, Bd.2, Nr.2, Mai 1999 (1999-05), Seiten 159-176, XP002256979 ist bereits ein System bekannt, in dem ein ungesicherter erster Computer in einer feindlichen Umgebung betrieben wird und in gewissen Zeitabständen seine Logfiles an einen sicheren zweiten Computer übermittelt, um auf diese Weise Manipulationsversuche am ersten Computer nachträglich erkennen zu können.

Die wesentliche Idee ist dort, zum Authentisieren der Logfile-Einträge in den ersten Computer Einmal-Schlüssel zu verwenden, die sofort nach Ihrer Verwendung überschrieben werden. Dabei bleibt das Problem von in Speicherbausteinen möglicherweise verbleibenden Informationsspuren, die ein Angreifer auch nach Überschreiben der ursprünglichen Werte auswerten kann (data remanence). Das Verfahren nutzt dabei die Verkettung von Authentikationen aufeinanderfolgender Logfile-Einträge, um die Erzeugung von Logfiles in Realzeit zu gewährleisten. Je länger diese Verkettungen werden, desto länger dauert es im Mittel, die Authentizität selektierter Logfile-Einträge zu verifizieren. Es ergibt sich ein Trade-Off zwischen Geschwindigkeit beim Erzeugen und beim selektiven Verifzieren von Logfile-Einträgen. Das Verfahren stellt eine Lösung für maximale Geschwindigkeit beim Erzeugen der Logfiles dar. Ein Nachteil besteht darin, daß im ersten Computer kein manipulationssicherer Prozessor mit sicheren Speicher eingesetzt wird. Deshalb können die Authentisierungsschlüssel nicht länger im Speicher gespeichert werden. Ein weiterer Nachteil besteht darin, daß eine zu lange mittlere Verifikationszeit für selektive Logfile-Einträge benötigt wird.

Es ist Aufgabe, ein System mit einem Sicherheitsmodul und ein Verfahren zur Aufzeichnung von Echtzeittransaktionen mit hoher Fälschungssicherheit zu schaffen, wobei nur ein einziges gesichertes Translogfile erzeugt wird, das von einer Anzahl an unterschiedlichen und unabhängigen sogar gegenseitig misstrauenden Institutionen analysiert werden kann. Das Translogfile soll in feiner Granularität kryptographisch gesichert und in Echtzeit erzeugt werden.

In verschiedenen Lastsituationen soll nicht nur jeweils eine ausreichende Geschwindigkeit für die Erzeugung von Logfiles erzielt, sondern auch eine deutlich kürzere mittlere Verifikationszeit für selektive Logfile-Einträge erreicht werden.

Die Aufgabe wird mit den Merkmalen des Anspruchs 1 für das Verfahren bzw. mit den Merkmalen des Anspruchs 10 für das System gelöst.

Man geht davon aus, daß es zwei Sorten Transaktionen gibt, solche von kurzer Dauer mit hoher Auftrittsfrequenz (Echtzeit-Transaktion) und solche von längerer Dauer, die eher sporadisch auftreten (Nicht-Echtzeit-Transaktionen). Die Einteilung aller zu protokollierender Transaktionen in diese beiden Klassen ist beim Systementwurf zu treffen und wird im folgenden vorausgesetzt. Um in Echtzeit authentisch protokollieren zu können, müssen die Echtzeit-Transaktionen in Echtzeit authentisiert werden können während die Nicht-Echtzeit-Transaktionen eine langsamere Authentikation zulassen. Jede Transaktion erzeugt einen Eintrag im Translogfile des Sicherheitsmoduls.

In einer ersten Operation wird ein asymmetrisches Verschlüsselungsverfahren zur Absicherung von Daten eingesetzt, die aber nicht in Echtzeit gespeichert oder als Nachricht an einen Translogfileanalysator übermittelt werden müssen. Jede Nachricht enthält Transaktionsdaten, welche mindestens als Eintrag im Translogfile vom Kundensystem gespeichert werden. Die Speicherung kann dabei extern vom Sicherheitsmodul in einen separaten Speicher des Kundensystems erfolgen.

Einträge von Nicht-Echtzeit-Transaktionen (Nicht-Echtzeiteinträge) werden beispielsweise benutzt, um verschlüsselte Schlüssel, Sicherheitswerte u.a. Werte in Vorbereitung evtl. nachfolgender Einträge von Echtzeit-Transaktionen (Echtzeiteinträge) an mindestens einen Translogfileanalysator zu übermitteln. Ein Bereitstellen mindestens eines verschlüsselten initialen Sicherheitswertes umfasst ein Aufzeichnen eines Nicht-Echtzeiteintrags, der mindestens einen verschlüsselten initialen Sicherheitswert für mindestens einen Translogfileanalysator enthält. Letzterer ist eine Institution, die an einer Kommunikation mit einem Sicherheitsmodul eines Kundensystems teilnimmt, um eine Auswertung der übermittelten Nachricht durchzuführen. Der initiale Sicherheitswert ist eine Zufallszahl oder basiert auf einer solchen. Er ist zum Beispiel ein initialer Hashwert, der anschließend verwendet wird, und der nach einer ersten mathematischen Funktion eine Generierung eines nachfolgenden Hashwertes für eine Sicherung eines nachfolgenden Eintrags in Echtzeit erlaubt.

Der Nicht-Echtzeiteintrag kann in Form eines ersten Datensatzes gespeichert und in Form einer ersten Nachricht zum bestimmungsgemäßen Translogfileanalysator übermittelt werden. Für andere Translogfileanalysatoren sind weitere Nicht-Echtzeiteinträge oder -teileinträge vorgesehen. Mehrere solcher Teileinträge können in Form weiterer erster Datensätze oder in Form von Teil-Datensätzen innerhalb eines ersten Datensatzes gespeichert bzw. übertragen werden. Nicht-Echtzeiteinträge können mittels einer digitalen Signatur unfälschbar gesichert werden.

In einer zweiten Operation wird zur Authentisierung von Echtzeiteinträgen ein - gegenüber dem digitalen Signierverfahren - schnelleres Verfahren eingesetzt. Echtzeiteinträge werden durch ein Flag markiert und durch einen Sequenzzähler im Translogfile indiziert. Das Translogfile ist eine gesicherte aber überwiegend unverschlüsselte individuelle Aufzeichnung von Einträgen von Transaktionsdaten und/oder den Status des Gerätes. Es kann in beliebig akkumulierten Portionen übermittelt und von Translogfileanalysatoren ausgewertet werden. Am einen Ende des Spektrums ist die Übertragung Eintrag für Eintrag in Echtzeit und am anderen Ende steht die Übertragung des gesamten Translogfile im Stapelbetrieb.

Von einem Sicherheitsmodul wird ein initialer bzw. ein aktueller Sicherheitswert nach der ersten mathematischen Funktion gebildet und zusammen mit einem Echtzeiteintrag zu einem Authentisierungscode verarbeitet. Die Sicherung eines Echtzeiteintrags erfolgt vorzugsweise durch einen Authentisierungscode, der auf den Daten des Echtzeiteintrags und auf einem Hashwert basiert, wobei letzterer in vorteilhafter Weise die Generierung eines nachfolgenden Hashwertes für die Ableitung eines zukünftigen Authentisierungscodes gestattet. Ein Echtzeiteintrag im Translogfile wird so aufgebaut, daß zuerst der sequentielle Index geschrieben wird, anschliessend die Bezeichnung für den Typ der Echtzeiteinträge, danach die Transaktionsdaten und schliesslich der Authentisierungscode. Dabei wird der Authentisierungscode mit einer zweiten mathematischen Funktion berechnet, vorzugsweise indem eine Hashfunktion auf die Sequenznummer, die Transaktionsdaten und einen Hashwert angewendet wird, der nach der ersten mathematischen Funktion speziell für diesen Eintrag vorwegberechnet wurde. Mit dem Authentisierungs-Code gelingt eine ausreichende Sicherung des Eintrags in Echtzeit.

Die Erzeugung eines Translogfiles erfolgt somit in feiner Ganularität kryptographisch gesichert. Echtzeit- und Nicht-Echtzeiteinträge können im Rahmen einer Echtzeitaufzeichnung in beliebiger Reihenfolge und Anzahl erzeugt und aufgezeichnet und/oder übermittelt werden.

Vorteilhaft erlaubt der Einsatz eines Authentisierungs-Codes gerade eine Analyse der Echtzeit-Nachricht auch durch mehrere unabhängige Institutionen. Voraussetzung dafür ist ein bei allen Institutionen gleicher initialer Hashwert, der jedesmal durch einen Nicht-Echtzeiteintrag übermittelt wird.

Im System hat jeweils jeder Kommunikationsteilnehmer eine Kommunikationsschnittstelle, einen Kommunikationspuffer und einen Sicherheitsmodul bzw. eine Sicherheitsbox. Eine gesicherte Echtzeitaufzeichnung kann von einer Vielzahl an berechtigten Translogfileanalysatoren mit Sicherheitsbox ausgewertet werden. Ein Mikroprozessor des Sicherheitsmoduls ist programmiert, als Authentifikationsmaschine zu arbeiten. Im Sicherheitsmodul liegen ein öffentlicher Verschlüsselungsschlüssel jeder Sicherheitsbox und ein privater Signierschlüssel des Sicherheitsmoduls nichtflüchtig eingespeichert vor. Ein Mikroprozessor jeder Sicherheitsbox ist programmiert, als Verifikationsmaschine zu arbeiten und einen Hashwert zu aktualisieren. In jeder Sicherheitsbox sind ein privater Entschlüsselungsschlüssel der Sicherheitsbox, ein öffentlicher Verifizierschlüssel des Sicherheitsmoduls sowie ein aktueller Hashwert nichtflüchtig eingespeichert.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Figur 1, Flußplan eines bekannten Public Key-Verfahrens,

Figur 2, Flußplan eines bekannten Signierverfahrens,

Figur 3, Schlüsseltausch über einen authentischen Kanal,

Figur 4, Flußdiagramm zur Steuerung des Sicherheitsmoduls (im Kundensystem),

Figur 5, Flußdiagramm zur Erzeugung eines Nicht-Echtzeiteintrags,

Figur 6, Flußdiagramm zur Erzeugung eines Echtzeiteintrags,

Figur 7, Flußdiagramm zur Steuerung einer Sicherheitsbox (im Translogfileanalysator),

Figur 8, Flußdiagramm zur Verifikation eines Nicht-Echtzeiteintrags,

Figur 9, Flußdiagramm zur Verifikation eines Echtzeiteintrags,

Figur 10, Blockschaltbild eines Kundensystems mit Sicherheitsmodul in Kommunikationsverbindung mit zwei Translogfileanalysatoren.

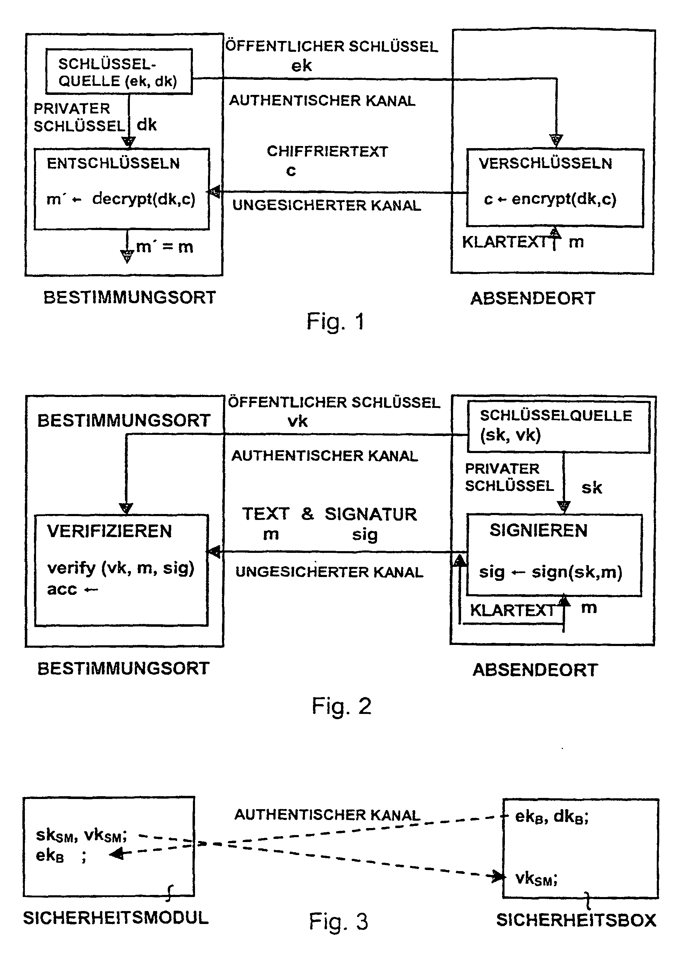

In der Figur 1 wird der Flußplan eines an sich bekannten Public Key-Verfahrens erläutert. Die Anwendung asymmetrischer Verschlüsselungsalgorithmen (RSA, ElGamal) erfordert die Generierung eines Schlüsselpaares:

$$(ek, dk) \leftarrow genKey(k). \tag{1}$$

Ein Verschlüsselungsschlüssel ek ist öffentlich und ein Entschlüsselungsschlüssel dk ist privat. Der öffentliche Verschlüsselungsschlüssel ek wird zum Teilnehmer am Absendeort einer Mitteilung übermittelt. Dabei ist beispielsweise durch einen authentischen Kanal zu sichern, dass der öffentliche Verschlüsselungsschlüssel nicht zwischen Bestimmungsort und Absendeort ausgetauscht wird und im Rahmen einer "man in the middle attack" mißbraucht wird. Zur Verschlüsselung der Mitteilung m am Absendeort zum Chiffriertext c ist eine mathematische Operation der Art vorgesehen:

$$c \leftarrow \text{encrypt (ek, m)} \qquad\qquad (2)$$

Der Chiffriertext c kann nun über einen ungesicherten Kanal zum Bestimmungsort übermittelt werden. Zur Entschlüsselung des Chiffriertextes c ist eine Operation der Art vorgesehen:

$$m \leftarrow \text{decrypt (dk, c)} \qquad\qquad (3)$$

Der zweite Teilnehmer entschlüsselt am Bestimmungsort mit dem privaten Entschlüsselungsschlüssel dk den Chiffriertext c zur Mitteilung m', welche mit der ursprünglichen Mitteilung m übereinstimmt, wenn ek und dk das zuvor erzeugte Schlüsselpaar sind.

In der Figur 2 wird der Flußplan eines Signier-Verfahrens erläutert. Die Anwendung digitaler Signaturmechanismen (RSA, DSA oder ECDSA) erfordert ebenfalls die Generierung eines Schlüsselpaares. Zunächst wird ein öffentlicher Verifizierschlüssel vk beispielsweise über einen authentischen Kanal zum zweiten Teilnehmer am Bestimmungsort übermittelt. Ein Signierschlüssel sk verbleibt als privater Schlüssel des Sicherheitsmoduls am Absendeort eines ersten Teilnehmers und der Verifizierschlüssel vk ist als öffentlicher Schlüssel zum Auswerten von digitalen Signaturen sig vorgesehen, die einer Mitteilung m (= message) zugeordnet sind. Die Mitteilung m und die Signatur sig können nun über einen ungesicherten Kanal zum zweiten Teilnehmer am Bestimmungsort übermittelt werden. Die Erzeugung einer Signatur sig erfolgt am Absendeort eines ersten Teilnehmers durch den Sicherheitsmodul. Dabei ist eine mathematische Operation der Art vorgesehen:

$$sig \leftarrow \text{sign (sk, m)} \qquad\qquad (4)$$

Zur Verifizierung einer Signatur sig am Bestimmungsort ist ein öffentlicher Verifizierschlüssel vk, die Mitteilung m und eine mathematische Operation der Art vorgesehen:

$$acc \leftarrow \text{verify (vk, m, sig)}. \qquad\qquad (5)$$

wobei das Ergebnis acc wahr (gültig) oder falsch (ungültig) sein kann.

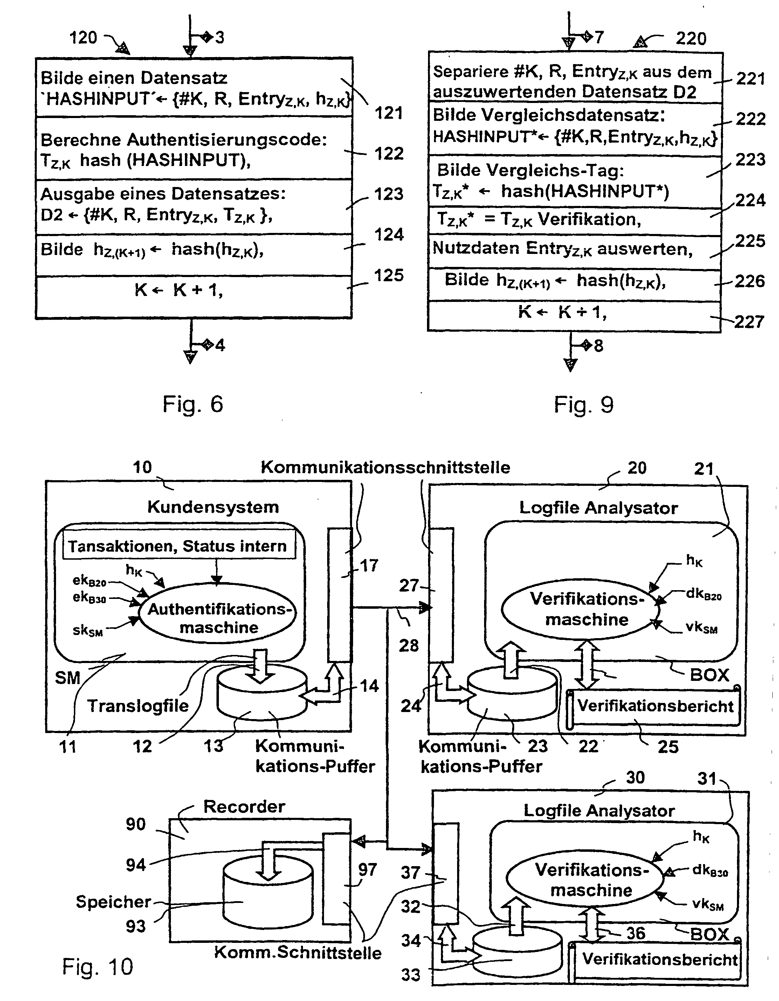

Anhand der Figur 3 wird der Schlüsseltausch über einen authentischen Kanal erläutert. Zur einfacheren Darstellung wird in den Figuren 3 bis 9 stets nur von einem Translogfileanalysator ausgegangen. Der Fall mehrerer Translogfileanalysatoren wird in Figur 10 gezeigt. Das Kundensystem ist mit einem Sicherheitsmodul SM ausgestattet und jeder der Translogfileanalysatoren entsprechend mit einer Sicherheitsbox BOX. Bevor die Translogfileanalysatoren Translogfiles analysieren können, werden über einen authentischen Kanal öffentliche Schlüssel ausgetauscht. Die Sicherheitsbox hat ein Public Key Paar $ek_B$, $dk_B$ und liefert den öffentlichen Verschlüsselungsschlüssel $ek_B$ zum Sicherheitsmodul SM. Das Sicherheitsmodul SM hat Public Key Paar $sk_{SM}$, $vk_{SM}$ und liefert den öffentlichen Verifizierschlüssel $vk_{SM}$ zur Sicherheitsbox. Das kann beispielsweise in einer sicheren Umgebung beim Hersteller des Sicherheitsmoduls über einen authentischen Kanal geschehen (Fig.3). Auch ein nachträgliches Zu- oder Abschalten weiterer Translogfileanalysatoren ist möglich, zum Beispiel mithilfe einer oder mehrerer Public Key Infrastrukturen (PKI). Public Key Infrastrukturen werden zum Beispiel in folgenden Standards und Lehrbüchern erläutert :

[1] American National Standards Institute: Public Key Infrastructure-Practices and Policy Framework; ANSI X9.79, 2000

[2] ISO/CCITT Directory Convergence Document: The Directory - Authentication Framework; CCITT Recommendation X.509 and ISO 9594-8, "Information Processing Systems - Open Systems Interconnection - the Directory-Authentication Framework".

[3] ISO_9594-8a 95 ISO/IEC 9594-8: Information technology - Open Systems Interconnection - Specification - The Directory: Authentication framework; ISO/IEC International Standard, Second edition 15.09.1995.

[4] ISO_10181-296 ISO/IEC 10181-2: Information technology - Open Systems Interconnection - Security frameworks for open systems: Authentication framework; ISO International Standard 10181-2, Ist edition, 96.05.15, 1996.

[5] Bruce Schneier: Applied Cryptography: Protocols, Algorithms, and Source Code in C; (2nd ed.) John Wiley & Sons, New York 1996, Chapter 24.9

[6] Simson Garfinkel, Gene Spafford: Web Security & Commerce (Section III Digital Certificates; O'Reilly & Associates, Cambridge 1997.

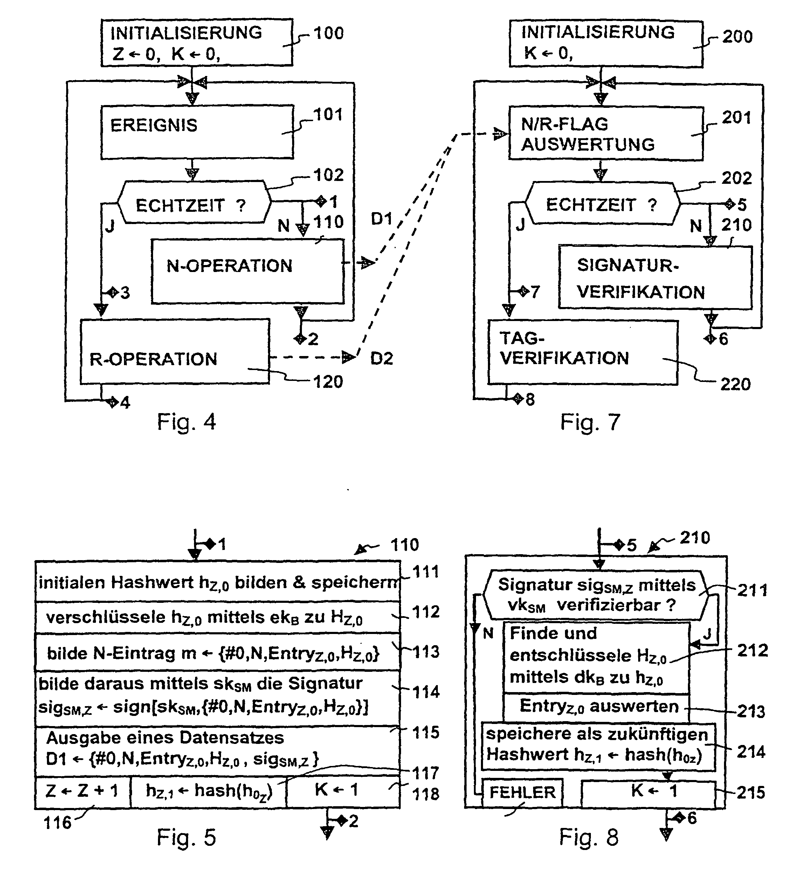

Anhand des in der Figur 4 gezeigten Flußplanes wird das erfindungsgemäße Verfahren zur Echtzeitaufzeichnung für ein einfaches Beispiel mit nur einem Kundensystem und nur einem Translogfileanalysator näher erläutert. Im Sicherheitsmodul SM eines Kundensystems erfolgt im Schritt 100 eine Initialisierung, wobei die Zählerstände eines Zählers Z für N-Operationen und eines Zählers K für R-Operationen jeweils auf Null gesetzt werden. ("R" steht für real-time, "N" für non-real-time. Eine vom Kundensystem ausgeführte Transaktion wird im nachfolgenden Schritt 101 als Ereignis eines bestimmten Typs erfaßt. Wenn im Abfrageschritt 102 festgestellt wird, dass eine Nichtechtzeit-Transaktion vorliegt, dann wird auf den Schritt 110 zur N-Operation verzweigt, an dessen Ende ein einen Nicht-Echtzeiteintrag enthaltender Datensatz D1 erzeugt wird. Gleichzeitig wird der Zähler Z inkrementiert und der Zähler K (wieder) auf 1 initialisiert. Es ist dafür zu sorgen, daß die allererste protokollierte Transaktion stets eine niederfrequente Transaktion ist.

Wenn im Abfrageschritt 102 festgestellt wird, dass eine Echtzeit-Transaktion vorliegt, dann wird auf den Schritt 120 zur R-Operationen verzweigt, an dessen Ende ein einen Echtzeiteintrag enthaltender Datensatz D2 erzeugt wird. Gleichzeitig wird der Sequenzzähler K inkrementiert. Nach Erzeugen des Datensatzes D1 oder D2 wird auf den Schritt 101 der Ereigniserfassung zurückverzweigt und das Sicherheitsmodul ist für die nächste Transaktion bereit.

Die Figur 5 zeigt ein Flußdiagramm zur Erzeugung eines Nicht-Echtzeiteintrags im Rahmen der N-Operation 110. Anfangs ist der Variablen Z bzw. K ein Wert Null zugewiesen, d.h. $Z \leftarrow 0$, $K \leftarrow 0$. Z ist der Zähler der N-Operationen und K ist der Zähler der R-Operationen, wobei K jedesmal von Null zu zählen beginnt, sobald eine N-Operation ausgefuehrt wurde. Zunächst wird im Sicherheitsmodul eine Zufallszahl X erzeugt und daraus ein initialer Hashwert $h_{Z,0}$ gebildet und gespeichert (Subschritt 111). Dann erfolgt durch den Sicherheitsmodul des Absenders im Subschritt 112 eine Verschlüsselung des initialen Hashwertes $h_{Z,0}$ nach einem asymmetrischen Verfahren mit dem vom Empfänger gelieferten öffentlichen Verschlüsselungsschlüssel $ek_B$ der Sicherheits-Box. Das Ergebnis wird als Wert der Variablen $H_{Z,0}$ zugewiesen:

$$H_{Z,0} \leftarrow \text{encrypt} (ek_B, h_{Z,0}), \qquad \text{mit dem Anfangswert } Z = 0, \qquad (6)$$

Die Variable $H_{Z,0}$ enthält den verschlüsselten Hashwert. Der Chiffriertext $H_{Z,0}$ und ggf. weitere Daten bilden mindestens einen ersten Nicht-Echtzeiteintrag m, welche mit einer Signatur gesichert wird:

$$\text{sig}_{SM,Z} \leftarrow \text{sign} (sk_{SM}, ...., H_{Z,0}), \qquad \text{mit dem Anfangswert } Z = 0,$$

$$\text{mit } m = (\#K, N, \text{Entry}_{Z,0}, H_{Z,0}) \qquad (7)$$

Die o.g. weiteren Daten, wie Sequenznummer #K, Eintrags-Typ N sowie die Transaktionsdaten $\text{Entry}_{Z,0}$ und der verschlüsselte Hashwert $H_{Z,0}$ werden im Subschritt 113 zum Nicht-Echtzeiteintrag m zusammengefaßt, wobei m und die Signatur $\text{sig}_{SM,Z}$ Bestandteile des Datensatzes D1 sind, der zu einem bestimmten Translogfileanalysator übermittelbar ist. An späterer Stelle wird in Verbindung mit der Fig.10 erläutert, dass im ersten Fall für einen anderen u-ten Translogfileanalysator - in nicht gezeigter Weise - ein weiterer Nicht-Echtzeiteintrag $m_u$ oder im zweiten Fall ein weiterer - nicht gezeigter - Datensatz $D1_u$ erzeugt wird. Die Länge der zu bildenden Signatur kann bei vorgenannten ersten Fall verringert werden, wenn - in nicht gezeigten Weise - auf den vorgenannten Nicht-Echtzeiteintrag m (bzw. weiteren Nicht-Echtzeiteintrag $m_u$) vor der Signaturbildung eine Hash-Funktion angewendet wird. Durch den Sicherheitsmodul des Absenders wird die Signatur im Subschritt 114 gemäß der Gleichung (7) generiert. Der Signierschlüssel $sk_{SM}$ ist ein privater Schlüssel des Sicherheitsmoduls SM des Kundensystems. Nun kann durch den Sicherheitsmodul im Subschritt 115 ein erster Datensatz D1 ausgegeben werden. Es gilt:

$$D1 \leftarrow \{\#0, N, Entry_{Z,0}, H_{Z,0}, sig_{SM,Z}\}, \tag{8}$$

mit dem Anfangswert Z = 0, wobei:

Z: Zähler für Nicht-Echtzeiteinträge
#0: Sequenznummer (Zählerstand K = 0)
N: Typ des Eintrags,
$Entry_{Z,0}$: Transaktionsdaten,
$H_{Z,0}$: Verschlüsselter Hashwert,
$sig_{SM,Z}$: Signatur.

Der Datensatz D1 kann in Echtzeit gespeichert bzw. zum Empfänger am Bestimmungsort zwecks Auswertung übertragen werden. Der Sicherheitsmodul inkrementiert im Subschritt 116 den Schleifenzähler Z für N-Operationen, d.h. $Z \leftarrow Z + 1$. Im Folgesubschritt 117 wird ein Hashwert vorbereitet:

$$H_{Z,K} \leftarrow hash(h_{Z,0}) \tag{9}$$

Abschließend wird im Subschritt 118 der vorgenannte Sequenzzähler auf den Wert Eins gesetzt, d.h. $K \leftarrow 1$. Der vorgenannte zukünftige Hashwert $h_{Z,1}$ ist nun aktuell für eine Folgeoperation. Vom somit abgearbeiteten Schritt 110 des in der Figur 4 gezeigten Flußplanes wird zum Schritt 101 zurückverzweigt. Im Abfrageschritt 102 wird dann erneut geprüft, welche Art Transaktion vorliegt.
Im Ergebnis einer N-Operation wird somit ein Austausch eines (vom Sicherheitsmodul nach dem Zufallsprinzip gewählten) initialen Hashwertes $h_{Z,0}$ durch bekannte kryptographische Mechanismen zwischen einem Sicherheitsmodul und den Sicherheitsboxen eines Translogfileanalysators ermöglicht.
Die Figur 6 zeigt ein Flußdiagramm zur Erzeugung eines Echtzeiteintrags im Rahmen der R-Operation 120. Anfangs ist der Variablen Z bzw. K ein Wert Null zugewiesen, d.h. $Z \leftarrow 0, K \leftarrow 0$.
Eine R-Operation 120 wird durchgeführt, wenn eine hochfrequente Transaktion abgelaufen ist, die im nachfolgenden Schritt 101 als Ereignis eines bestimmten Typs "R" erfaßt wird. Im ersten Subschritt 121 der Echtzeit-Operation 120 wird ein Datensatz HASHINPUT, durch Zusammenstellen der Daten #K, R und Transaktionsdaten $Entry_{Z,K}$ gebildet, an die ein aktueller Hashwert $h_{Z,K}$ angehängt wird:

$$HASHINPUT = \{\#K, R, Entry_{Z,K}, h_{Z,K}\} \tag{10}$$

Dabei bedeutet analog zu Figur 5:

Z: Zähler für Nicht-Echtzeiteinträge
#K: Sequenznummer (K = 1, 2, ...)
N: Typ des Eintrags,
$Entry_{Z,K}$: Transaktionsdaten,
$h_{Z,0}$: Hashwert.

Im zweiten Subschritt 122 erfolgt ein Erzeugen eines Authentisierungscodes $T_{Z,K}$ für jeden Echtzeiteintrag #K,R,$Entry_{Z,K}$ mittels des Sicherheitsmoduls 11, durch Einsetzen des Echtzeiteintrages #K,R,$Entry_{Z,K}$ und des aktuellen Sicherheitswertes $h_{Z,K}$ in einen gleichfalls vom Translogfileanalysator verwendeten Algorithmus mit einer zweiten mathematischen Funktion für den Authentisierungscode $T_{Z,K}$. Die Berechnung des Authentisierungscodes $T_{Z,K}$ erfolgt vorzugsweise durch Bildung des Hashwertes über den Datensatz HASHINPUT:

$$T_{Z,K} \leftarrow hash(HASHINPUT) \tag{11}$$

Im dritten Subschritt 123 erfolgt ein Anfügen des resultierenden Authentisierungscodes $T_{Z,K}$ an den Echtzeiteintrag. Der vollständige Datensatz D2 mit dem Echtzeiteintrag sieht wie folgt aus:

$$D2 \leftarrow \{\#K, R, Entry_{Z,K} \ T_{Z,K}\}, \qquad mit \ K = 1 \tag{12}$$

Der in die Hash-Funktion eingehende aktuelle Hashwert $h_{Z,K}$ taucht im Echtzeiteintrag nicht auf. Anderenfalls könnte jemand, der das Translogfile abhört, die nachfolgenden Hashwerte ableiten, so daß das Translogfile ab diesem Eintrag nicht mehr authentisiert wäre. In der beschriebenen Variante wird nach jeder im Schritt 123 durchgeführten Ausgabe des Datensatzes D2 der aktuelle Hashwert $h_{Z,K}$ für eine zukünftige Aufzeichnung gewechselt, woraus eine hohe Fälschungssicherheit resultiert.

Im vierten Subschritt 124 erfolgt ein Wechsel durch eine Ableitung des neuen Hashwerts $h_{Z,(K+1)}$ im o.g. Beispiel durch Hashen des alten Hashwerts, also:

$$H_{Z,(K+1)} \leftarrow hash(h_{Z,K}), \qquad für \ K = 1, \tag{13}$$

Im fünften Schritt 125 wird der Sequenzzähler $K \leftarrow K + 1$ inkrementiert und der neue Hashwert in einen Speicher für den aktuellen Hashwert übernommen. Anschliessend wird zum Schritt 101 zurückverzweigt. Im Abfrageschritt 102 wird dann erneut geprüft, welcher Typ einer Transaktion vorliegt. Bei dem nächsten Echtzeitereignis kann wieder der erste Schritt 121 für einen folgenden Echtzeiteintrag und nachgeführte Hashwerte durchgeführt werden. Dabei wird der initiale Hashwert $h_{Z,0}$ oder derjenige aktuelle Hashwert $h_{Z,K}$ verwendet, der sich durch die mathematische Operation aus dem vorangehend durchlaufenen Schritt 124 ergibt. Es ist vorgesehen, dass ein nachfolgender aktueller Sicherheitswert $h_{Z,1}$ aus dem initialen Sicherheitswert $h_{Z,0}$ nach einer gleichfalls vom Translogfileanalysator verwendeten ersten mathematischen Funktion gebildet wird, welche eine Ableitung von nachfolgenden Sicherheitswerten $h_{Z,1}, h_{Z,2}, ..., h_{Z,K}, ..., h_{Z,V}$ zur Sicherung und zur Verifizierung der nachfolgenden Echtzeiteinträge $\#K,R,Entry_{Z,K}$ erlaubt, die als solche durch ein R-Flag erkennbar und einem Sequenzzählerstand $\#K$ entsprechend im Translogfile auflistbar sind. Für die Hashfunktion können verschiedene Kandidaten gewählt werden, z.B. SHA-1.

Die Figur 7 zeigt einen Flußplan zur Steuerung einer Sicherheitsbox im Translogfileanalysator, anhand dessen die erfindungsgemäße Verifikation eines Translogfiles erläutert wird. Zunächst erfolgt im Schritt 200 eine Initialisierung, wobei der Zählerstand des Zählers K für die Sequenznummer des ersten Eintrags eines Translogfiles jeweils auf Null gesetzt wird.

Für die Prozedur beim Empfang am Bestimmungsort wird in einem Schritt 201 das N/R-Flag des Datensatzes ausgewertet. Im Abfrageschritt 202 wird festgestellt, dass der Datensatz beispielsweise ein N-Flag enthält und folglich wird zum Schritt 210 verzweigt, um den Nicht-Echtzeiteintrag anhand seiner Signatur zu verifizieren (Gleichung 5).

Wird im Abfrageschritt 202 festgestellt, dass ein Echtzeiteintrag vorliegt, weil der Datensatz ein R-Flag enthält, dann wird zum Schritt 220 verzweigt, um die Echtzeiteintrag anhand seines Authentisierungscodes zu verifizieren. Im Ergebnis jeder Überprüfungen der Einträge der Datensätze D1 bzw. D2 in den Schritten 210 bzw. 220 wird außerdem der Sequenzzählerstand K inkrementiert. Wenn der Eintrag erfolgreich verifiziert wurde, wird die Variable $h_{Z,K}$ zur Vorbereitung der nächsten Operation aktualisiert. Nach dem Durchlaufen der Schritte 210 oder 220 wird wieder auf den Schritt 201 zur N/R-Flag-Auswertung zurückgesprungen.

Die Figur 8 zeigt zur detaillierteren Darstellung von Subschritten des Schrittes 210 ein Flußdiagramm zur Signatur-Verifikation. Zunächst wird im Subschritt 211 gegen den Verifikationsschlüssel $vk_{SM}$ geprüft, ob die zum Nichtechtzeit-Eintrag zugehörige Signatur $sig_{SM,Z}$ gültig ist

$$verify \ (vk_{SM}, \ (\#0,N, \ Entry_{Z,0}, H_{Z,0}, \ sig_{SM,Z}) = TRUE \ ? \tag{14}$$

Damit muß der in dem übermittelten Nicht-Echtzeiteintrag enthaltene verschlüsselte Wert $H_{Z,0}$ ebenfalls echt sein. Wird im Subschritt 211 die Verifizierbarkeit der Signatur des ersten Datensatzes D1 festgestellt, dann wird zum Subschritt 212 verzweigt, in welchem der Wert $H_{Z,0}$ mithilfe des geheimen Schlüssels $dk_B$ der Sicherheitsbox des Translogfileanalysators entschlüsselt wird. Im optionalen Subschritt 213 können anschließend die Transaktionsdaten $Entry_{Z,0}$ ausgewertet werden. Im nachfolgenden Schritt 214 wird aus dem Ergebnis $h_{Z,0}$ vorbereitend für einen evtl. nachfolgenden Echtzeiteintrag der Hashwert

$$h_{Z,1} \leftarrow hash(h_{Z,0}) \tag{15}$$

abgeleitet und gespeichert. Im Schritt 215 wird der Sequenzzähler auf den Wert Eins gesetzt:

$$K \leftarrow 1 \tag{16}$$

Anschliessend wird zu Schritt 201 zurückgesprungen.

Wird im Subschritt 211 die Signatur als ungültig erkannt, so wurde der Nicht-Echtzeiteintrag möglicherweise verändert. Dann wird im Subschritt 216 eine Fehlerbehandlungsroutine gestartet.

Die Figur 9 zeigt zur detaillierteren Darstellung von Subschritten des Schrittes 220 ein Flußdiagramm zur Verifikation eines Echtzeiteintrags. Im Subschritt 221 separiert die Sicherheitsbox des Translogfileanalysators den Authentisierungscode $T_{Z,K}$. In Schritt 222 werden die übrigen Daten des Echtzeiteintrags und der gespeicherte Hashwert $h_{Z,K}$ zum String HASHINPUT* zusammengestellt. Letzterer gestattet es, anschließend im Subschritt 223 einen Vergleichscode $T_{Z,K}^*$ zu berechnen:

$$T_{Z,K}^* = \text{hash(HASHINPUT*)}$$

$$\text{mit HASHINPUT*} = \{\#K, R, \text{Entry}_{Z,K}, h_{Z,K}\} \tag{17}$$

Im Subschritt 224 erfolgt die Verifikation. Stimmen der in o.g. Weise gebildete Vergleichscode und der empfangene Authentisierungscode überein, wird der Echtzeiteintrag als authentisch angenommen. Die Code-Bildung muß natürlich auf der Sender- und Empfängerseite in dergleichen Weise durchgeführt werden. Im Subschritt 226 wird ein neuer aktueller Hashwert für die nachfolgende Operation gebildet:

$$h_{Z,(K+1)}^* \leftarrow \text{nash}(h_{Z,K}^*) \tag{18}$$

Im Subschritt 227 erfolgt dann bei der Aktualisierung $K \leftarrow K + 1$ die Übernahme des neu gebildeten Hashwertes in den Speicher für den aktuellen Hashwert. Ergab die Verifikation im Subschritt 224 einen Fehler, dann wird das im Verifikationsbericht vermerkt. Damit ist auch der Schritt 220 durchlaufen und es wird zum Schritt 201 zur Auswertung des N/R-Flags zurückverzweigt.

Die folgende Tabelle entfaltet beispielhaft einen Ausschnitt aus einem Translogfile, der durch eine anfängliche N-Transaktion (mit Index Z) und V aufeinanderfolgende R-Transaktionen entsteht, d.h. $K = 1...V$. Die Tabelle weist von links nach rechts vier Spalten auf. Die erste Spalte zeigt die Sequenznummer #, die zweite Spalte zeigt die übrigen Daten der Mitteilung einschließlich der Transaktionsdaten, die dritte Spalte zeigt die Signatur (erzeugt im Schritt 114) bzw. den Authentikationscode (gemäß Schritt 122) und die vierte Spalte zeigt, wie der verschlüsselte Hashwert $H_{Z,0}$ (Schritt 112) bzw. die fortlaufenden Hashwerte $h_{Z,1}$, $h_{Z,2}$,... (Schritt 124) erzeugt werden. Dabei ist zu bemerken, dass die Hashwerte $h_{Z,1}$, $h_{Z,2}$,... vom Sicherheitsmodul intern erzeugt werden, aber NICHT zu den Transaktionsdaten des jeweiligen Eintrags geschrieben werden.

Tabelle 1:

| Nr. | Daten | Signatur bzw. Authentikationscode | Sicherheitswert |
|---|---|---|---|
| #0 | "N",$\text{Entry}_{Z,0}$,$H_{Z,0}$ | $\text{Sig} \leftarrow \text{sign}[sk_{SM},(\#0,"N",\text{Entry}_{Z,0},H_{Z,0})]$ | $H_{Z,0} \leftarrow \text{encrypt}(ek_B,h_{Z,0})$ |
| #1 | "R",$\text{Entry}_{Z,1}$ | $T_{Z,1} \leftarrow \text{hash}(\#1,"R", \text{Entry}_{Z,1},h_{Z,1})$ | $h_{Z,1} \leftarrow \text{hash}(h_{Z,0})$ |
| #2 | "R",$\text{Entry}_{Z,2}$ | $T_{Z,2} \leftarrow \text{hash}(\#2,"R", \text{Entry}_{Z,2},h_{Z,2})$ | $h_{Z,2} \leftarrow \text{hash}(h_{Z,1})$ |
| . . . | . . . | . . . | . . . |
| #K | "R",$\text{Entry}_{Z,K}$ | $T_{Z,K} \leftarrow \text{hash}(\#K,"R", \text{Entry}_{Z,K},h_{Z,K})$ | $h_{Z,K} \leftarrow \text{hash}(h_{Z,K-1})$ |
| . . . | . . . | . . . | . . . |
| #v | "R",$\text{Entry}_{Z,V}$ | $T_{Z,V} \leftarrow \text{hash}(\#v,"R", \text{Entry}_{Z,V},h_{Z,V})$ | $h_V \leftarrow \text{hash}(h_{Z,V-1})$ |

Ein Hauptvorteil des beschriebenen Verfahrens ist dessen beliebige Erweiterbarkeit, so daß ein Sicherheitsmodul ein Translogfile derart authentisierten kann, daß es auch von mehreren unabhängigen und sogar sich gegenseitig mißtrauenden Translogfileanalysatoren ausgewertet werden kann. Gegenseitig mißtrauende Translogfileanalysatoren können sich nicht darauf einlassen, untereinander von Sicherheitsmodulen erstellte Aufzeichnungen (Translogfiles) über Kundensysteme und geheime (asymmetrischen) Verschlüssellungsschlüssel $ek_B$ auszutauschen. Stattdessen werden nun Nicht-Echtzeiteinträge eines Translogfiles genutzt, um diesen Schlüsselaustausch zu realisieren.

Ein Sicherheitsmodul kann mehrere Translogfileanalysatoren bedienen. Das setzt aber vorraus, dass die Subschritte 112-115 des Schrittes 110 für die N-Operation im Sicherheitsmodul modifiziert werden. Statt den Hashwert $h_{Z,0}$ nur einmal mithilfe des Verschlüssellungsschlüssels $ek_B$ zu verschlüsseln, wird der Hashwert $h_{Z,0}$ für jeden teilnehmenden Translogfileanalysators mithilfe des Verschlüssellungsschlüssels ... $ek_{Bu}$, $ek_{Bu+1}$, ... der jeweiligen Sicherheitsbox jedes teilnehmenden u-ten bzw. u+1-ten Translogfileanalysators verschlüsselt. Als Ergebnis des Subschrittes 112 bildet das Sicherheitsmodul entsprechend viele verschlüsselte Hashwerte $H_{u,Z,0}$, $H_{u+1,Z,0}$, ... Um das Translogfile nicht zu diversifizieren, schreibt das Sicherheitsmodul nun alle berechneten Werte ... $H_{u,Z,0}$, $H_{u+1,Z,0}$, ... in den Nicht-Echtzeiteintrag hinein (Schritt 113), signiert ihn gemäß Schritt 114 und fügt die Signatur hinzu (Schritt 115).

Es ist klar, daß die Erzeugung eines Datensatzes D1 mit Nicht-Echtzeiteinträgen für mehrere Translogfileanalysatoren mehr Zeit für die Durchführung der Subschritte 112...115 in Anspruch nimmt, als wenn nur ein Translogfileanalysator bedient werden muss. Das gilt aber nicht für die Echtzeiteinträge, weil für diese nur ein einziger Authentikationscode berechnet wird, das alle Translogfileanalysatoren gleichermassen prüfen können.

Alternativ zu dieser Lösung kann der Schritt 110 für die N-Operation im Sicherheitsmodul mehrmals hintereinander durchlaufen werden, um separate Datensätze D1 mit jeweils einem Nicht-Echtzeiteintrag für je einen der Translogfileanalysatoren zu erzeugen.

In der Figur 10 wird ein Blockschaltbild eines in Echtzeit arbeitenden Sicherheitsmoduls 11 eines Kundensystems 10 in Kommunikation mit zwei unabhängigen Translogfileanalysatoren 20 und 30 dargestellt. Die Transaktionsdaten gelangen über einen Bus 12 in einen Kommunikationspuffer 13 und via Kommunikationsschnittstellen 17, 27 bzw. 37 zum Kommunikationspuffer 23 bzw. 33 des Translogfileanalysators 20 bzw. 30 zur Auswertung und ggf. via Kommunikationsschnittstelle 97 zur Aufzeichnung in einen entfernt angeordneten Recorder 90. Es ist vorgesehen, dass das Kundensystem 10 über eine Kommunikationsverbindung 28 mit mindestens einem Translogfileanalysator 20, 30 verbunden ist, dass letzterer eine Kommunikationsschnittstelle 27, 37 und eine geeignete elektrische Verbindung 24, 34 zum Kommunikationspuffer 23, 33 des Translogfileanalysators 20, 30 aufweist, dass die Sicherheits-Box 21, 31 über einen Bus 22, 32 am Kommunikationspuffer 23, 33 angeschlossen ist. Um das vom Kundensystem 10 erzeugte Translogfile im Translogfileanalysator 20, 30 auszuwerten, wird dessen Gültigkeit geprüft und darüber ein Verifikationsbericht 25 erstellt, den die Sicherheitsbox 21, 31 ggf. über einen Bus 26, 36 ausgibt. Zwischen den Kommunikationspuffern 13, 23 bzw. 33 und der Kommunikationsschnittstelle 17, 27 bzw. 37 und im Recorder 90 zwischen der Kommunikationsschnittstelle 97 und dem Speicher 93 bestehen geeignete elektrische Verbindungen 14, 24 bzw. 34, 94, welche zur Kommunikation nicht zusätzlich authentisiert werden müssen. Die Sicherheitsbox 21, 31 ist über einen Bus 22, 32 am Kommunikationspuffer 23, 33 angeschlossen. Ein Sicherheitsmodul 11 kann beispielsweise hardwareseitig so aufgebaut sein, wie das in EP 1.035.513 A2, EP 1.035.516 A2, EP 1.035.517 A2, EP 1.035.518 A2 bereits für den Einsatz in Frankiermaschinen beschrieben wurde. Vorteilhaft wird der Mikroprozessor durch einen schnelleren Typ - beispielsweise S3C44AOX - ersetzt und ggf. wird noch die Speicherkapazität durch zusätzliche SRAMs erweitert. Im Unterschied zur bisherigen Software wird nun ein asymmetrischer Kryptoalgorithmus und ein Hash-Algorithmus, ggf. neben einem symmetrischen Kryptoalgorithmus, eingesetzt, um eine Echtzeitaufzeichnung von Ereignissen sicher und schnell zu erzeugen.

Es ist vorgesehen, dass das Sicherheitsmodul 11 einen Speicher zur nichtflüchtigen Speicherung von Zwischenergebnissen und Schlüsseln aufweist und Mittel zur Durchführung einer Nicht-Echtzeit-Operation mit Erzeugung eines ersten Datensatzes D1 und zur Durchführung mindestens einer Echtzeit-Operation mit Erzeugung mindestens eines zweiten Datensatzes D2 aufweist. Der vorgenannte Speicher ist außerdem zum nichtflüchtigen Speichern eines aktuellen Sicherheitswertes $h_{Z,K}$ und eines Algorithmus mit einer ersten und zweiten mathematischen Funktion vorgesehen. Der vorgenannte Algorithmus wird gleichfalls in jedem Translogfileanalysator 20, 30 verwendet. Das vorgenannte Mittel ist der Mikroprozessor des Sicherheitsmoduls, der programmiert ist, den jeweils aktuellen Sicherheitswert $h_{Z,K}$ aus einem initialen oder vorhergehenden Sicherheitswert nach dem Algorithmus mit der ersten mathematischen Funktion zu generieren und einen Authentisierungscode $T_{Z,K}$ aus dem Echtzeiteintrag und dem jeweils aktuellen Sicherheitswert $h_{Z,K}$ zugehörig zu einem Echtzeiteintrag nach dem Algorithmus mit der zweiten mathematischen Funktion zu erzeugen. Das Sicherheitsmodul 11 weist Mittel zur Bereitstellung der Datensätze D1, D2 für eine Übertragung zu mindesten einem der Translogfileanalysatoren 20, 30 auf.

Das Sicherheitsmodul 11 ist Bestandteil eines Kundensystems 10, welches über eine Kommunikationsverbindung 28 mit einer Vielzahl an berechtigten Translogfileanalysatoren 20, 30 verbunden wird, wobei das Sicherheitsmodul 11 mit den öffentlichen Verschlüsselungsschlüsseln $ek_{B20}$, $ek_{B30}$ ausgestattet ist, mit welchen ein initialer Hashwert $h_{Z,K}$ verschlüsselt wird. Das Sicherheitsmodul 11 ist dazu programmiert, im Ergebnis mindestens einer Nicht-Echtzeit-Operation jeweils einen Nicht-Echtzeit-Eintrag in Form eines Datensatzes D1 an die beteiligten Translogfileanalysatoren zu übermitteln, wobei der Nicht-Echtzeit-Eintrag jeweils den initialen Hashwert $h_{Z,0}$ in verschlüsselte Form enthält.

Das Sicherheitsmodul 11 ist über einen Kommunikationspuffer 13 mit einer Kommunikationsschnittstelle 17 eines Kundensystems 10 verbunden undd weist einen Speicher auf, mindestens zur Speicherung eines öffentlichen Verschlüsselungsschlüssels $ek_{B20}$, $ek_{B30}$ der von mindestens einem entfernten Translogfileanalysator 20, 30 bereitgestellt wird, eines privaten Signierschlüssels $sk_{SM}$ des Sicherheitsmoduls 11 und eines aktuellen Hashwertes $h_{Z,K}$ und zur Speicherung des Algorithmuses mit der ersten und zweiten mathematischen Funktion. Das Sicherheitsmodul 11 weist darüber hinaus programmierbare Mittel auf, um eine Zufallszahl bzw. den initialen Hashwert $h_{Z,0}$ zu generieren und letzteren mit mindestens einem öffentlichen Verschlüsselungsschlüssel $ek_{B20}$, $ek_{B30}$ zu mindestens einem Chiffriertext zu verschlüsseln, mindestens einen den Chiffriertext einschließenden Nichtechtzeit-Eintrag zu bilden, eine digitale Signatur (sig) zugehörig zu mindestens einem Nichtechtzeit-Eintrag zu erzeugen und einen Authentisierungscode $T_{Z,K}$ zugehörig zu einem Echtzeit-Eintrag zu erzeugen, wobei der jeweils aktuelle Hashwert $h_{Z,K}$ aus dem initialen Hashwert $h_{Z,K}$ bzw. vorherigen Hashwert $h_{Z,K-1}$ nach dem Algorithmus mit der ersten mathematischen Funktion generiert wird und wobei der Authentisierungscode $T_{Z,K}$ aus dem Echtzeit-Eintrag und dem jeweils aktuellen Hashwert $h_{Z,K}$ nach dem Algorithmus mit der zweiten mathematischen Funktion erzeugt wird. Das Sicherheitsmodul 11 ist programmiert, bei einer Aufzeichnung von mit dem jeweils aktuellen Authentisierungscode $T_{Z,K}$ in feiner Granularität gesicherten Echtzeit-Einträgen in Echtzeit in eine Kommunikation mit dem mindestens einen entfernten Translogfileanalysator 20, 30 einzutreten, wobei alle aufzuzeichnenden Transaktionsdaten in Form von Datensätzen D1, D2 in den Kommunikationspuffer 13 und von dort über eine geeignete elektrische Verbindung 14, zur Kommunikationsschnittstelle 17 und von dort über eine entfernte Kommunikationsschnittstelle 27, 37 zum Kommunikationspuffer 23, 33 des entfernten Translogfileanalysators 20, 30 übertragen werden.

Es ist weiterhin vorgesehen, dass das Sicherheitsmodul 11 dazu programmiert ist,

- die Nicht-Echtzeit-Operation entsprechend der Vielzahl an berechtigten Translogfileanalysatoren zu wiederholen, wobei die Zufallszahl bzw. der initiale Hashwert $h_{Z,0}$ mit unterschiedlichen öffentlichen Verschlüsselungsschlüsseln $ek_{B20}$, $ek_{B30}$ verschlüsselt wird, um jeweils einen zum Chiffriertext verschlüsselten initialen Sicherheitswert für die entfernten Translogfileanalysatoren 20, 30 in den Nicht-Echtzeiteinträgen eines Datensatzes (D1) bereitzustellen,
- den Nicht-Echtzeiteintrag eines Datensatzes D1 mit der digitalen Signatur sig, die mit dem privaten Signierschlüssel $sk_{SM}$ des Sicherheitsmoduls 11 und den Nicht-Echtzeiteinträgen eines Datensatzes D1 erzeugt wird, zu sichern, so dass jeder Nicht-Echtzeiteintrag mittels eines öffentlichen Verifizierschlüssels $vk_{SM}$ des Sicherheitsmoduls 11 von berechtigten Translogfileanalysatoren 20, 30 verifiziert und der als Chiffriertext empfangene verschlüsselte initiale Sicherheitswert von den entfernten Translogfileanalysator 20, 30 mittels eines privaten Entschlüsselungsschlüssels $dk_{B20}$, $dk_{B30}$ zum initialen Hashwert $h_{Z,0}$ bzw. zur Zufallszahl entschlüsselt werden kann,
- den aktuellen Hashwert $h_{Z,K}$ nach einem Algorithmus mit der ersten mathematischen Funktion zu erzeugen und
- einen Echtzeiteintrag eines Datensatzes D2 im Rahmen einer Echtzeitoperation mit einem Authentisierungscode zu sichern, in welchen der aktuelle Hashwert $h_{Z,K}$ eingeht, so dass ein und dieselbe gesicherte Echtzeitaufzeichnung von der Vielzahl an berechtigten Translogfileanalysatoren 20, 30 ausgewertet werden kann.

Das Sicherheitsmodul 11 ist über einen Bus 12 mit dem Kommunikationspuffer 13 und letzterer über eine geeignete elektrische Verbindung 14 mit der Kommunikationsschnittstelle 17 des Kundensystems 10 verbunden. Die Kommunikationsschnittstelle 17 des Kundensystems 10 ist über die Kommunikationsverbindung 28 mit mindestens einer Kommunikationsschnittstelle 27, 37 des mindestens einen Translogfileanalysators 20, 30 verbunden. Letzterer weist eine geeignete elektrische Verbindung 24, 34 von der Kommunikationsschnittstelle 27, 37 zum Kommunikationspuffer 23, 33 des Translogfileanalysators 20, 30 auf. Die Sicherheitsbox 21, 31 ist über einen Bus 22, 32 am Kommunikationspuffer 23, 33 angeschlossen.

Die Sicherheitsbox 21, 31 ist in vorteilhafter Weise bezüglich der Hard- und Software in gleicher Weise aufgebaut, wie das Sicherheitsmodul 11. Das Sicherheitsmodul 11 und die Sicherheitsbox 21, 31 bilden einen besonderen Sicherheitsbereich und enthalten nichtflüchtige Speicher zur nichtflüchtigen Speicherung von Zwischenergebnissen und Schlüsseln, welche nicht nach außen gelangen dürfen. Im Kommunikationspuffer 23, 33 erfolgt nur eine Zwischenspeicherung von wenigen Transaktionsdaten. Die hauptsächliche Speicherung der Aufzeichnung aller Transaktionsdaten des Translogfile erfolgt extern vom Sicherheitsmodul bzw. Sicherheitsbox im Speicher 93. Alternativ kann der Speicher 93 auch im Kundensystem 10 oder im Translogfileanalysator 20 oder 30 angeordnet werden und der gezeigte separate Recorder 90 kann entfallen.

Da bei der Initialisierung des Kundensystems 10 und des Logfile Analysators 20, 30 ein initialer Datenaustausch vorgenommen wurde, liegen im Sicherheitsmodul 11 ein öffentlicher Verschlüsselungsschlüssel $ek_{B20}$ bzw. $ek_{B30}$ der Sicherheitsbox des Translogfileanalysators 20 bzw. 30 und ein privater Signierschlüssel $sk_{SM}$ des Sicherheitsmoduls 11 nichtflüchtig eingespeichert vor. Ein Mikroprozessor des Sicherheitsmoduls 11 ist durch ein im internen Programmspeicher gespeichertes Programm programmiert, als Authentifikationsmaschine zu arbeiten. Die Sicherheitsbox 21 bzw. 31 des Translogfileanalysators 20 bzw. 30 hat einen privaten Entschlüsselungsschlüssel $dk_{B20}$ bzw. $dk_{B30}$ und ein öffentlicher Verifizierschlüssel $vk_{SM}$ des Sicherheitsmoduls 11 liegt im Translogfileanalysator 20 bzw. 30 nichtflüchtig eingespeichert vor. Durch ein im internen Programmspeicher gespeichertes Programm ist ein Mikroprozessor des Translogfileanalysators 20, 30 oder der Sicherheitsbox 21, 31 programmiert, als Verifikationsmaschine zu arbeiten und einen Verifikationsbericht 25 auszugeben. Wie das vom Sicherheitsmodul 11 authentisierte Translogfile durch den Translogfileanalysator 20, 30 analysiert wird, hängt von der entsprechenden Anwendung ab und soll hier nicht näher betrachtet werden.

In jeder Sicherheitsbox 21, 31 sind nicht nur ein privater Entschlüsselungsschlüssel $dk_{B20}$, $dk_{B30}$ der Sicherheitsbox, ein aktueller Hashwert $h_{Z,K}$ und ein Algorithmus der ersten und zweiten mathematischen Funktion nichtflüchtig gespeichert, sondern die Sicherheitsbox 21, 31 ist außerdem mit Mitteln ausgestattet, den nichtflüchtig gespeicherten Hashwert $h_{Z,K}$ zu aktualisieren und einen Vergleichscode zu erzeugen, um damit und anhand des Authentisierungscodes die Echtheit der zugehörigen Echtzeit-Aufzeichnung zu überprüfen und um darüber einen Verifikationsbericht 25 auszugeben.

Es ist vorgesehen, dass das Sicherheitsmodul 11 eines Kundensystems 10 Nichtechtzeiteinträge mit allen Informationen ausstattet und sie an alle Translogfileanalysatoren 20, 30 verteilt, so dass die Sicherheitsbox jedes der Translogfileanalysatoren 20, 30 den passenden Teil heraussucht.

Die Absenderkennung eines Kundensystems 10 ist in jedem übermittelten Stück eines Translogfile enthalten.

Alternativ, im Falle einer Übertragung Nichtechtzeit-Eintrag für Nichtechtzeit-Eintrag steht im ersten Datensatz D1, die Absenderkennung im Entry-Feld jedes Nichtechtzeit-Eintrags.

Das Sicherheitsmodul 11 eines Kundensystems 10 stellt die NichtechtzeitEinträge individuell für jeden Logfileanalysator zusammen. Im System ist eine Vielzahl an Kundensystemen 10, die jeweils mit einem Sicherheitsmodul 11 ausgestattet sind, über ein Kommunikationsnetz 28 mit einer Vielzahl an berechtigten Translogfileanalysatoren 20, 30 verbunden ist.

Ein Kundensystem 10 ist beispielsweise eine Frankiermaschine mit Sicherheitsmodul 11.

Das beschriebene Verfahren setzt Hashfunktionen für zwei Zwecke ein: Einerseits zum Erzeugen der Hashwertketten $h_{Z,1}$, $h_{Z,2}$, ... in den Schritten 117, 214, 124 und 226, nach welchen vorgesehen ist, dass ein nachfolgender aktueller Sicherheitswert $h_{Z,1}$ aus dem initialen Sicherheitswert $h_{Z,0}$ mittels einer gleichfalls vom Translogfileanalysator verwendeten ersten mathematischen Funktion gebildet wird, wobei der aktuelle Sicherheitswert $h_{Z,K}$ ein Hashwert ist und dass die erste mathematische Funktion eine Hashfunktion ist. Insbesondere kann für die erste Aufgabe eine Hashfunktion mit Schlüssel bzw. ein dedizierter message authentication code eingesetzt werden. Vorzugsweise kann hier HMAC eingesetzt werden. Andererseits als MAC (message authentication code) zur Authentisierung und Verifikation von Echtzeiteinträgen in den Schritten 122 sowie 223. Für beide Zwecke dürfen unterschiedliche Hashfunktionen gewählt werden.

Alternativ zur Verwendung einer Hashfunktion für den ersteren Zweck, kann auch so vorgegangen werden. dass ein nachfolgender aktueller Sicherheitswert $h_{Z,1}$ aus dem initialen Sicherheitswert $h_{Z,0}$ mittels einer gleichfalls vom Translogfileanalysator verwendeten ersten mathematischen Funktion gebildet wird, indem der initiale Sicherheitswert $h_{Z,0}$ an den Echtzeiteintrag $\#K,R,Entry_{Z,K}$ angehängt wird und indem die erste mathematische Funktion eine Hash-Funktion ist, die auf den Echtzeiteintrag mit dem angehängten initalen Sicherheitswert ($h_{Z,0}$) angewendet wird.

Das System kann einen Computer einschließen, der in Verbindung mit Diensten für die Postbearbeitung wirksam wird und der Bestandteil insbesondere einer Dienstleistungszentrale ist, die in an sich bekannter Weise eine (nicht gezeigte) Datenbank 90' aufweist, wobei letztere einen (nicht gezeigten) Speicher 93' für die Registrierung von Echtzeit- und Nichtechtzeittransaktionen enthält, auf welchen nur ein Sicherheitsmodul 11 und berechtigte Translogfileanalysatoren zugreifen können. Ersetzt man das Kundensystem 10 durch einen Server 10', dann ergibt sich ein ähnliches Blockschaltbild, wie bereits anhand der Figur 10 detailliert erläutert wurde. Der Server kann in an sich bekannter Weise mit Frankiermaschinen, Waagen oder ähnlichen Geräten in Verbindung (nicht gezeigt) stehen. Zur Echtzeitaufzeichnung mit hoher Fälschungssicherheit weist das System einen Sicherheitsmodul 11 auf, der Bestandteil eines (nicht gezeigten) Servers 10' der Dienstleistungszentrale ist und über eine (nicht gezeigte) Kommunikationsverbindung 28' mit einer Vielzahl an berechtigten Translogfileanalysatoren 20, 30 verbunden wird. Letztere und die Dienstleistungszentrale bilden unterschiedliche Parteien, die zu voneinander unterschiedlichen Firmen bzw. Institutionen zugehörig sind. Das Sicherheitsmodul 11 hat einen Speicher zur Speicherung der öffentlichen Verschlüsselungsschlüssel $ek_{B20}$, $ek_{B30}$ der Translogfileanalysatoren 20, 30, mit welchen ein initialer Hashwert $h_{Z,K}$ verschlüsselt wird. Das Sicherheitsmodul 11 ist dazu programmiert, im Ergebnis mindestens einer Nicht-Echtzeit-Operation jeweils einen Nicht-Echtzeit-Eintrag in Form eines Datensatzes D1 an die beteiligten Translogfileanalysatoren 20, 30 zu übermitteln, wobei der Nicht-Echtzeit-Eintrag jeweils den initialen Hashwert $h_{Z,0}$ in verschlüsselter Form enthält.

Die Erfindung ist nicht auf die vorliegende Ausführungsform beschränkt, da offensichtlich weitere andere Anordnungen bzw. Ausführungen der Erfindung entwickelt bzw. eingesetzt werden können, die - vom gleichen Grundgedanken der Erfindung ausgehend - von den anliegenden Patentansprüchen umfaßt werden.

**Patentansprüche**

1. Verfahren zur Echtzeitaufzeichnung mit hoher Fälschungssicherheit mittels eines Sicherheitsmoduls, **gekennzeichnet durch** die Schritte:

   - Liefern (110, 120) eines für ein Sicherheitsmodul (11) zugängliches TransLogfiles, wobei das Sicherheitsmodul (11) mit mindestens einem TransLogfilanalysator (20) kommuniziert,
   - Bereitstellen (112) mindestens eines verschlüsselten initialen Sicherheitswertes als Chiffriertext $H_{Z,0}$ **durch** das Sicherheitsmodul (11) und nachfolgende Bildung (117) eines aktuellen Sicherheitswertes $h_{Z,1}$ aus dem initialen Sicherheitswert $h_{Z,0}$ nach einer gleichfalls vom TransLogfileanalysator verwendeten ersten mathematischen Funktion, welche eine Ableitung einer Vielzahl von nachfolgenden Sicherheitswerten $h_{Z,1}$, $h_{Z,2}$, ..., $h_{Z,K}$, ..., $h_{Z,V}$ zur Sicherung und zur Verifizierung der nachfolgend vorkommenden Echtzeiteinträge {#K,R, Entry$_{Z,K}$} erlaubt,
   - Auflisten der vorgenannten Echtzeiteinträge {#K,R,Entry$_{Z,K}$} zu Transaktionen, welche jeweils in dem TransLogfile einem Sequenzzählerstand #K entsprechend aufgelistet, als Echtzeiteintrag **durch** ein Flag R erkennbar und **durch** die Transaktionsdaten Entry$_{Z,K}$ **gekennzeichnet** sind, wobei ein nachfolgender Sicherheitswert für eine nachfolgend vorkommende Transaktion gebildet (117) wird,
   - Erzeugen (122) eines Authentisierungscodes $T_{Z,K}$ für jeden Echtzeiteintrag {#K, R, Entry$_{Z,K}$} mittels des Sicherheitsmoduls (11), **durch** Einsetzen des Echtzeiteintrages {#K,R,Entry$_{Z,K}$} und des aktuellen Sicherheitswertes $h_{Z,K}$ in einen gleichfalls vom TransLogfileanalysator verwendeten Algorithmus mit einer zweiten mathematischen Funktion für den Authentisierungscode $T_{Z,K}$,
   - Sichern (123) jedes Echtzeiteintrags {#K,R,Entry$_{Z,K}$} **durch** Anhängen des Authentisierungscodes $T_{Z,K}$ und
   - Aufzeichnung jedes mit dem Authentisierungscode gesicherten unverschlüsselten Echtzeiteintrags in Form eines Datensatzes D2.

2. Verfahren, nach Anspruch 1, **dadurch gekennzeichnet, dass** das Bereitstellen des mindestens einen verschlüsselten initialen Sicherheitswertes als Chiffriertext ($H_{Z,0}$) ein Aufzeichnen eines Nicht-Echfizeiteintrags umfaßt, welcher mindestens den einen Chiffriertext ($H_{Z,0}$) für den mindestens einen Translogfileanalysator (20) einschließt.

3. Verfahren, nach Anspruch 2, **dadurch gekennzeichnet, dass** das vorgenannte Bereitstellen ein Übermitteln des Nicht-Echtzeiteintrags in Form eines ersten Datensatzes (D1) zum Translogfileanalysator (20) einschließt.

4. Verfahren, nach Anspruch 2, **dadurch gekennzeichnet, dass** ein vorbestimmter Nicht-Echtzeiteintrag in Form eines ersten Datensatzes (D1) beim bestimmungsgemäßen Translogfileanalysator (20) gespeichert wird.

5. Verfahren, nach Anspruch 1, **dadurch gekennzeichnet, dass** der vorgenannte mit dem Authentisierungscode gesicherte Echtzeiteintrag beim Aufzeichnen in Form eines zweiten Datensatzes (D2) für einen Translogfileanalysator (20) lesbar und in Echtzeit gespeichert wird sowie dass der vorgenannte Echtzeiteintrag in Form des zweiten Datensatzes (D2) zum Translogfileanalysator (20) übermittelt wird.

6. Verfahren, nach Anspruch 1, **dadurch gekennzeichnet, dass** das Bereitstellen des mindestens einen verschlüsselten initialen Sicherheitswertes als Chiffriertext ($H_{Z,0}$) eine erste Operation (N-OPERATION) mit einem asymmetrischen Verschlüsselungsverfahren beim Verschlüsseln des initialen Sicherheitswertes ($h_{Z,0}$) in Verbindung mit dem Bilden eines Nicht-Echtzeiteintrags umfaßt.

7. Verfahren, nach Anspruch 1, **dadurch gekennzeichnet, dass** das Erzeugen eines Authentisierungscode für jeden Echtzeiteintrag in einer zweiten Operation (R-OPERATION) des Sicherheitsmoduls (11) erfolgt und dass die zweite mathematische Funktion, eine Hash-Funktion ist, die auf den Echtzeiteintrag mit dem angehängten aktuellen Sicherheitswert ($h_{Z,K}$) angewendet wird, wodurch ein Authentisierungscode ($T_{Z,K}$) gebildet wird.

8. Verfahren, nach Anspruch 1, **dadurch gekennzeichnet, dass** der aktuelle Sicherheitswert ($h_{Z,K}$) ein Hashwert ist und dass die erste mathematische Funktion eine Hashfunktion ist.

9. Verfahren, nach Anspruch 1, **dadurch gekennzeichnet, dass** ein nachfolgender aktueller Sicherheitswert ($h_{Z,1}$) aus dem initialen Sicherheitswert ($h_{Z,0}$) mittels einer gleichfalls vom Translogfileanalysator verwendeten ersten mathematischen Funktion gebildet wird, indem der initiale Sicherheitswert ($h_{Z,0}$) an den Echtzeiteintrag (#K,R, Entryz,K) angehängt wird und indem die erste mathematische Funktion, eine Hash-Funktion ist, die auf den Echtzeiteintrag mit dem angehängten initalen Sicherheitswert ($h_{Z,0}$) angewendet wird.

**10.** System mit einem Sicherheitsmodul zur Echtzeitaufzeichnung mit hoher Fälschungssicherheit in ein Translogfile, zwecks historischen Aufzeichnung aller Transaktionsdaten **dadurch gekennzeichnet, dass** das Sicherheitsmodul (11) einen Speicher zur nichtflüchtigen Speicherung von Zwischenergebnissen und Schlüsseln aufweist und Mittel zur Durchführung einer Nicht-Echtzeit-Operation mit Erzeugung eines ersten Datensatzes (D1) und zur Durchführung mindestens einer Echtzeit-Operation mit Erzeugung mindestens eines zweiten Datensatzes (D2) aufweist, wobei der vorgenannte Speicher zum nichtflüchtigen Speichern eines aktuellen Sicherheitswertes ($h_{Z,K}$) und eines gleichfalls in mindestens einem Translogfileanalysator (20, 30) verwendeten Algorithmus mit einer ersten und zweiten mathematischen Funktion vorgesehen ist, wobei das vorgenannte Mittel programmiert ist, den jeweils aktuellen Sicherheitswert ($h_{Z,K}$) aus einem initialen oder vorhergehenden Sicherheitswert nach dem Algorithmus mit der ersten mathematischen Funktion zu generieren, und einen Authentisierungscode ($T_{Z,K}$) aus dem Echtzeiteintrag und dem jeweils aktuellen Sicherheitswert ($h_{Z,K}$) zugehörig zu einem Echtzeiteintrag nach dem Algorithmus mit der zweiten mathematischen Funktion zu erzeugen, sowie dass das Sicherheitsmodul (11) Mittel zur Bereitstellung der Datensätze (D1, D2) für eine Übertragung zu mindesten einem der Translogfileanalysatoren (20, 30) aufweist.

**11.** System, nach Anspruch 10, **dadurch gekennzeichnet, dass** das Sicherheitsmodul (11) Bestandteil eines Kundensystems (10) ist, welches über eine Kommunikationsverbindung (28) mit einer Vielzahl an berechtigten Translogfileanalysatoren (20, 30) verbunden wird, wobei das Sicherheitsmodul (11) mit den öffentlichen Verschlüsselungsschlüsseln ($ek_{B20}$, $ek_{B30}$) der Translogfileanalysatoren (20, 30) ausgestattet ist, mit welchen ein initialer Hashwert ($h_{Z,K}$) verschlüsselt wird und dass das Sicherheitsmodul (11) dazu programmiert ist, im Ergebnis mindestens einer Nicht-Echtzeit-Operation jeweils einen Nicht-Echtzeit-Eintrag in Form eines Datensatzes (D1) an die beteiligten Translogfileanalysatoren zu übermitteln, wobei der Nicht-Echtzeit-Eintrag jeweils den initialen Hashwert ($h_{Z,0}$) in verschlüsselter Form enthält.

**12.** System, nach den Ansprüchen 10 - 11, **dadurch gekennzeichnet, dass** das Sicherheitsmodul (11) über einen Kommunikationspuffer (13) mit einer Kommunikationsschnittstelle (17) eines Kundensystems (10) verbunden ist, dass das Sicherheitsmodul (11) einen Speicher aufweist, mindestens zur Speicherung eines öffentlichen Verschlüsselungsschlüssels ($ek_{B20}$, $ek_{B30}$) der von mindestens einem entfernten Translogfileanalysator (20, 30) bereitgestellt wird, eines privaten Signierschlüssels ($sk_{SM}$) des Sicherheitsmoduls (11) und eines aktuellen Hashwertes ($h_{Z,K}$) und zur Speicherung des Algorithmuses mit der ersten und zweiten mathematischen Funktion, dass das Sicherheitsmodul (11) programmierbare Mittel aufweist, um eine Zufallszahl bzw. den initialen Hashwert ($h_{Z,0}$) zu generieren und letzteren mit mindestens einem öffentlichen Verschlüsselungsschlüssel ($ek_{B20}$, $ek_{B30}$) zu mindestens einem Chiffriertext zu verschlüsseln, mindestens einen den Chiffriertext einschließenden Nichtechtzeit-Eintrag zu bilden, eine digitale Signatur (sig) zugehörig zu mindestens einem Nichtechtzeit-Eintrag zu erzeugen und einen Authentisierungscode ($T_{Z,K}$) zugehörig zu einem Echtzeit-Eintrag zu erzeugen, wobei der jeweils aktuelle Hashwert ($h_{Z,K}$) aus dem initialen Hashwert ($h_{Z,K}$) bzw. vorherigen Hashwert ($h_{Z,K-1}$) nach dem Algorithmus mit der ersten mathematischen Funktion generiert wird und wobei der Authentisierungscode ($T_{Z,K}$) aus dem Echtzeit-Eintrag und dem jeweils aktuellen Hashwert ($h_{Z,K}$) nach dem Algorithmus mit der zweiten mathematischen Funktion erzeugt wird, dass das Sicherheitsmodul (11) programmiert ist, bei einer Aufzeichnung von mit dem jeweils aktuellen Authentisierungscode ($T_{Z,K}$) in feiner Granularität gesicherten Echtzeit-Einträgen in Echtzeit in eine Kommunikation mit dem mindestens einen entfernten Translogfileanalysator (20, 30) einzutreten, wobei alle aufzuzeichnenden Transaktionsdaten in Form von Datensätzen (D1, D2) in den Kommunikationspuffer (13) und von dort über eine geeignete elektrische Verbindung (14), zur Kommunikationsschnittstelle (17) und von dort über eine entfernte Kommunikationsschnittstelle (27, 37) zum Kommunikationspuffer (23, 33) des entfernten Translogfileanalysators (20, 30) übertragen werden.

**13.** System, nach den Ansprüchen 10 bis 11, **dadurch gekennzeichnet, dass** das Sicherheitsmodul (11) dazu programmiert ist,

- die Nicht-Echtzeit-Operation entsprechend der Vielzahl an berechtigten Translogfileanalysatoren zu wiederholen, wobei die Zufallszahl bzw. der initiale Hashwert ($h_0$) mit unterschiedlichen öffentlichen Verschlüsselungsschlüsseln ($ek_{B20}$, $ek_{B30}$) verschlüsselt wird, um jeweils einen zum Chiffriertext verschlüsselten initialen Sicherheitswert für die entfernten Translogfileanalysatoren (20, 30) in den Nicht-Echtzeiteinträgen eines Datensatzes (D1) bereitzustellen,
- den Nicht-Echtzeiteintrag eines Datensatzes (D1) mit der digitalen Signatur (sig), die mit dem privaten Signierschlüssel ($sk_{SM}$) des Sicherheitsmoduls (11) und den Nicht-Echtzeiteinträgen eines Datensatzes (D1) erzeugt wird, zu sichern, so dass jeder Nicht-Echtzeiteintrag mittels eines öffentlichen Verifizierschlüssels ($vk_{SM}$) des Sicherheitsmoduls (11) von berechtigten Translogfileanalysatoren (20, 30) verifiziert und der als Chiffriertext empfangene verschlüsselte initiale Sicherheitswert von den entfernten Translogfileanalysator (20, 30) mittels eines privaten Entschlüsselungsschlüssels ($dk_{B20}$, $dk_{B30}$) zum initialen Hashwert ($h_{Z,0}$) bzw. zur Zufallszahl entschlüsselt werden kann,

- den aktuellen Hashwert ($h_{Z,K}$) nach einem Algorithmus mit der ersten mathematischen Funktion zu erzeugen und

- einen Echtzeiteintrag eines Datensatzes (D2) im Rahmen einer Echtzeitoperation mit einem Authentisierungscode zu sichern, in welchen der aktuelle Hashwert ($h_{Z,K}$) eingeht, so dass ein und dieselbe gesicherte Echtzeitaufzeichnung von der Vielzahl an berechtigten Translogfileanalysatoren (20, 30) ausgewertet werden kann.

14. System, nach den Ansprüchen 10 bis 12, **dadurch gekennzeichnet, dass** das Sicherheitsmodul (11) über einen Bus (12) mit dem Kommunikationspuffer (13) und letzterer über eine geeignete elektrische Verbindung (14) mit der Kommunikationsschnittstelle (17) des Kundensystems (10) verbunden ist, dass die Kommunikationsschnittstelle (17) des Kundensystems (10) über die Kommunikationsverbindung (28) mit mindestens einer Kommunikationsschnittstelle (27, 37) des mindestens einen Translogfileanalysators (20, 30) verbunden ist, dass letzterer eine geeignete elektrische Verbindung (24,34) von der Kommunikationsschnittstelle (27, 37) zum Kommunikationspuffer (23, 33) des Translogfileanalysators (20, 30) aufweist, dass eine Sicherheitsbox (21, 31) über einen Bus (22, 32) am Kommunikationspuffer (23, 33) angeschlossen ist, dass in der Sicherheitsbox (21, 31) ein privater Entschlüsselungsschlüssel ($dk_{B20}$, $dk_{B30}$) der Sicherheitsbox (21, 31), ein öffentlicher Verifizierschlüssel ($vk_{SM}$) des Sicherheitsmoduls, ein aktueller Hashwert ($h_{Z,K}$) und ein Algorithmus der ersten und zweiten mathematischen Funktion nichtflüchtig gespeichert sind, dass die Sicherheitsbox (21, 31) mit Mitteln ausgestattet ist, den nichtflüchtig gespeicherten Hashwert ($h_{Z,K}$) zu aktualisieren und einen Vergleichscode zu erzeugen, um damit und anhand des Authentisierungscodes die Echtheit der zugehörigen Echtzeit-Aufzeichnung zu überprüfen und um darüber einen Verifikationsbericht (25) auszugeben.

15. System, nach den Ansprüchen 10 bis 14, **dadurch gekennzeichnet, dass** eine Vielzahl an Kundensystemen (10), die jeweils mit einem Sicherheitsmodul (11) ausgestattet sind, über ein Kommunikationsnetz (28) mit einer Vielzahl an berechtigten Translogfileanalysatoren (20, 30) verbunden ist.

16. System, nach den Ansprüchen 10 bis 15, **dadurch gekennzeichnet, dass** ein Kundensystem (10) eine Frankiermaschine mit Sicherheitsmodul (11) ist.

17. System, nach den Ansprüchen 10 bis 16, **dadurch gekennzeichnet, dass** das Sicherheitsmodul (11) eines Kundensystems (10) Nichtechtzeiteinträge vor deren Verteilung an alle Translogfileanalysatoren (20, 30) mit allen Informationen ausstattet, wobei letztere dazu geeignet sind, dass die Sicherheitsbox jedes der Translogfileanalysatoren (20, 30) sich den passenden Teil heraussucht und wobei in jedem übermittelten Stück eines Translogfiles die Absenderkennung des Kundensystems (10) enthalten ist.

18. System, nach Anspruch 17, **dadurch gekennzeichnet, dass** im Falle einer aufeinanderfolgenden Übertragung Nichtechtzeit-Eintrag für Nichtechtzeit-Eintrag im ersten Datensatz (D1), die Absenderkennung im Entry-Feld jedes Nichtechtzeit-Eintrags steht.

19. System, nach den Ansprüchen 10 bis 11, **dadurch gekennzeichnet, dass** das Sicherheitsmodul (11) eines Kundensystems (10) Nichtechtzeiteinträge individuell für jeden Logfileanalysator zusammenstellt.

20. System, nach Anspruch 10, **dadurch gekennzeichnet, dass** das Sicherheitsmodul (11) Bestandteil eines Servers (10') ist, welcher über eine Kommunikationsverbindung (28') mit einer Vielzahl an berechtigten Translogfileanalysatoren (20, 30) verbunden wird, dass das Sicherheitsmodul (11) einen Speicher zur Speicherung der öffentlichen Verschlüsselungsschlüssel ($ek_{B20}$, $ek_{B30}$) der Translogfileanalysatoren (20, 30) aufweist, mit welchen ein initialer Hashwert ($h_{Z,K}$) verschlüsselt wird und dass das Sicherheitsmodul (11) dazu programmiert ist, im Ergebnis mindestens einer Nicht-Echtzeit-Operation jeweils einen Nicht-Echtzeit-Eintrag in Form eines Datensatzes (D1) an die beteiligten Translogfileanalysatoren (20, 30) zu übermitteln, wobei der Nicht-Echtzeit-Eintrag jeweils den initialen Hashwert ($h_{Z,0}$) in verschlüsselter Form enthält.

## Claims

1. A method for highly tamper-proof real-time recording by means of a security module, **characterized by** the following steps:

- delivery (110, 120) of a trans-logfile accessible to a security module (11), said security module (11) communicating with at least one trans-logfile analyzer (20);
- providing (112) of at least one encoded initial security value as encryption text $H_{Z,0}$ by the security module (11) and subsequent formation (117) of a current security value $h_{Z,1}$ from the initial security value $h_{Z,0}$ according to a mathematical function also used by the trans-logfile analyzer which allows for a derivation of a plurality of subsequent security values $h_{Z,1}$, $h_{Z,2}$, ... , $h_{Z,K}$, ..., $h_{Z,V}$ for the securing and verifying of the subsequently occurring real-time entries {#K,R,Entry$_{Z,K}$};
- enlisting of the above-mentioned real-time entries {#K,R,Entry$_{Z,K}$} for transactions that are respectively enlisted in the trans-logfile according to a sequence counter reading #K, recognizable as real-time entry by a flag R, and marked by the transaction data Entry$_{Z,K}$, a subsequent security value being formed (117) for a subsequently occurring transaction;
- generation (122) of an authentication code $T_{Z,K}$ for each real-time entry {#K,R,Entry$_{Z,K}$} by means of the security module (11) by entering the real-time entry {#K,R,Entry$_{Z,K}$} and the current security value $h_{Z,K}$ into an algorithm also used by the trans-logfile analyzer with a second mathematical function for the authentication code $T_{Z,K}$;
- securing (123) of each the real-time entry {#K,R,Entry$_{Z,K}$} by appending the authentication code $T_{Z,K}$; and
- recording of each uncoded real-time entry secured by the authentication code in the form of a data record D2.

2. A method according to claim 1, **characterized in that** the providing of the at least one encoded initial security value as encryption text ($H_{Z,0}$) comprises a recording of a non-real-time entry that includes at least the one encryption text ($H_{Z,0}$) for the at least one trans-logfile analyzer (20).

3. A method according to claim 2, **characterized in that** the above-mentioned providing includes a transmission of the non-real-time entry in the form of a first data record (D1) to the trans-logfile analyzer (20).

4. A method according to claim 2, **characterized in that** a predefined non-real-time entry in the form of a first data record (D1) is stored in the trans-logfile analyzer (20) according to the intended use.

5. A method according to claim 1, **characterized in that** the above-mentioned real-time entry secured with the authentication code, when recorded in the form of a second data record (D2), is stored in a form readable for the trans-logfile analyzer (20) and in real time and that the above-mentioned real-time entry is transmitted to the trans-logfile analyzer (20) in the form of the second data record (D2).

6. A method according to claim 1, **characterized in that** the providing of the at least one encoded initial security value as encryption text ($H_{Z,0}$) comprises a first operation (N-OPERATION) with an asymmetric encoding procedure in the encoding of the initial security value ($h_{Z,0}$) in connection with the formation of a non-real-time entry.

7. A method according to claim 1, **characterized in that** the generation of an authentication code for each real-time entry is done in a second operation (R-OPERATION) of the security module (11) and that the second mathematical function is a hash function that is applied to the real-time entry with the appended current security value ($h_{Z,K}$) forming that way an authentication code ($T_{Z,K}$).

8. A method according to claim 1, **characterized in that** the current security value ($h_{Z,K}$) is a hash value and that the first mathematical function is a hash function.

9. A method according to claim 1, **characterized in that** a subsequent current security value ($h_{Z,1}$) is formed from the initial security value ($h_{Z,0}$) using a first mathematical function that is also used by the trans-logfile analyzer by means of appending the initial security value ($h_{Z,0}$) to the real-time entry {#K,R,Entry$_{Z,K}$} and by the first mathematical function being a hash function that is applied to the real-time entry with the appended initial security value ($h_{Z,0}$).

10. A system with a security module for highly tamper-proof real-time recording in a trans-logfile for the purpose of historical recording of all transaction data, **characterized in that** the security module (11) contains a memory for the non-volatile storage of intermediate results and keys and has means for carrying out a non-real-time operation with generation of a first data record (D1) and for carrying out at least one real-time operation with the generation of at least one second data record (D2), said memory being provided for the non-volatile storage of a current security value ($h_{Z,K}$) and of an algorithm that is also used in at least one trans-logfile analyzer (20, 30) with a first and a second mathematical function, the above-mentioned means being programmed for generating the respectively current security value ($h_{Z,K}$) from an initial or preceding security value according to the algorithm by means of the first mathematical function and for generating an authentication code ($T_{Z,K}$) from the real-time entry and the respectively current security value ($h_{Z,K}$) belonging to a real-time entry according to the algorithm by means of the second mathematical function, and that the security module (11) contains means for providing the data records (D1, D2) for a transmission to at least one of the trans-logfile analyzers (20, 30).

11. A system according to claim 10, **characterized in that** the security module (11) is part of a customer system (10) that is connected via a communication link (28) with a plurality of authorized trans-logfile analyzers (20, 30), the security module (11) being equipped with the public encoding keys ($ek_{B20}$, $ek_{B30}$) of the trans-logfile analyzers (20, 30) by means of which an initial hash value ($h_{Z,K}$) is encoded; and that the security module (11) is programmed to transmit, as a result of at least one non-real-time operation, one non-real-time entry each in the form of a data record (D1) to the trans-logfile analyzers involved, the non-real-time entry always containing the initial has value ($h_{Z,0}$) in an encoded form.

12. A system according to claims 10-11, **characterized in that** the security module (11) is connected via a communication buffer (13) with a communication interface (17) of a customer system (10); that the security module (11) has a memory for storing at least one public encoding key ($ek_{B20}$, $ek_{B30}$) provided by at least one remote trans-logfile analyzer (20, 30), one private signing key ($sk_{SM}$) of the security module (11) and one current hash value ($h_{Z,K}$) and for storing the algorithm with the first and the second mathematical function; that the security module (11) has programmable means for generating a random number or the initial hash value ($h_{Z,0}$) and for encoding the latter with at least one public encoding key ($ek_{B20}$, $ek_{B30}$) into at least one encryption text, for forming at least one non-real-time entry including the encryption text, generating a digital signature (sig) belonging to at least one non-real-time entry, and for generating an authentication code ($T_{Z,K}$) belonging to a real-time entry, wherein the respectively current hash value ($h_{Z,K}$) is generated from the initial hash value ($h_{Z,K}$) or the preceding hash value ($h_{Z,K-1}$) according to the algorithm using the first mathematical function and wherein the authentication code ($T_{Z,K}$) is generated from the real-time entry and the respectively current hash value ($h_{Z,K}$) according to the algorithm using the second mathematical function; that the security module (11) is programmed for entering, upon recording real-time entries secured with the respectively current authentication code ($T_{Z,K}$) in a fine granularity, into communication in real time with at least one remote trans-logfile analyzer (20, 30), wherein all transaction data to be recorded are transmitted in the form of data records (D1, D2) into the communication buffer (13) and from there, via a suitable electric connection (14), to the communication interface (17) and from there, via a remote communication interface (27, 37), to the communication buffer (23, 33) of the remote trans-logfile analyzer (20, 30).

13. A system according to claims 10 to 11, **characterized in that** the security module (11) is programmed for

- repeating the non-real-time operation according to the plurality of authorized trans-logfile analyzers, wherein the random number or the initial hash value ($h_0$) is encoded with different public encoding keys ($ek_{B20}$, $ek_{B30}$) in order to provide, in the non-real-time entries of a data record (D1), one initial security value each encoded into the encryption text for the remote trans-logfile analyzers (20, 30)
- securing the non-real-time entry of a data record (D1) with the digital signature (sig) that is generated by means of the private signing key ($sk_{SM}$) of the security module (11) and the non-real-time entries of a data record (D1), so that every non-real-time entry can be verified by means of a public verification key ($vk_{SM}$) of the security module (11) of authorized trans-logfile analyzers (20, 30) and that the encoded initial security value received as encryption text can be decoded by the remote translogfile analyzer (20, 30) into the initial hash value ($h_{Z,0}$) or into the random number by means of a private decoding key ($dk_{B20}$, $dk_{B30}$);
- generating the current hash value ($h_{Z,K}$) according to an algorithm using the first mathematical function; and
- securing a real-time entry of a data record (D2) within the framework of a real-time operation by means of an authentication code into which the current hash value ($h_{Z,K}$) is included so that one and the same secured real-time record can be analyzed by the plurality of authorized translogfile analyzers (20, 30).

14. A system according to claims 10 to 12, **characterized in that** the security module (11) is connected via a bus (12) with the communication buffer (13) and the latter is connected via a suitable electric connection (14) with the communication interface (17) of the customer system (10); that the communication interface (17) of the customer system (10) is connected via the communication link (28) with at least one communication interface (27, 37) of the at least one trans-logfile analyzer (20, 30); that the latter has a suitable electric connection (24, 34) from the communication interface (27, 37) to the communication buffer (23, 33) of the trans-logfile analyzer (20, 30); that a security box (21, 31) is connected via a bus (22, 32) to the communication buffer (23, 33); that, in said security box (21, 31), a private decoding key ($dk_{B20}$, $dk_{B30}$) of the security box (21, 31), a public verification key ($vk_{SM}$) of the security module, a current hash value ($h_{Z,K}$) and an algorithm of the first and second mathematical functions are stored in a non-volatile manner; that the security box (21, 31) is equipped with means for updating the hash value ($h_{Z,K}$) stored in a non-volatile manner and for generating a comparative code in order to check, with that value and on the basis of the authentication code, the authenticity of the appertaining real-time record and to issue a respective verification report (25).

15. A system according to claims 10 to 14, **characterized in that** a plurality of customer systems (10) that are equipped with a security module (11) each are connected via a communication network (28) with a plurality of authorized trans-logfile analyzers (20, 30).

16. A system according to claims 10 to 15, **characterized in that** a customer system (10) is a franking machine with security module (11).

17. A system according to claims 10 to 16, **characterized in that** the security module (11) of a customer system (10) provides non-real-time entries with all information before they are distributed to all translogfile analyzers (20, 30), wherein said information is designed in such a manner that the security box of each of the trans-logfile analyzers (20, 30) can select the appropriate part and wherein each transmitted piece of a trans-logfile contains the sender's identification of the customer system (10).

18. A system according to claim 17, **characterized in that**, in case of a successive transmission of non-real-time entry by non-real-time entry in the first data record (D1), the sender's identification is written in the entry field of each non-real-time entry.

19. A system according to claims 10 to 11, **characterized in that** the security module (11) of a customer system (10) compiles non-real-time entries individually for each logfile analyzer.

20. A system according to claim 10, **characterized in that** the security module (11) is part of a server (10') that is connected via a communication link (28') with a plurality of authorized trans-logfile analyzers (20, 30); that the security module (11) has a memory for storing the public encoding keys ($ek_{B20}$, $ek_{B30}$) of the trans-logfile analyzers (20, 30) by means of which an initial hash value ($h_{Z,K}$) is encoded; and that the security module (11) is programmed for transmitting, as a result of at least one non-real-time operation, always one non-real-time entry in the form of a data record (D1) to the trans-logfile analyzers (20, 30) involved, wherein the non-real-time entry contains the respective initial hash value ($h_{Z,0}$) in an encoded form.

### Revendications

1. Dispositif de sauvegarde en temps réel haute sécurité antifalsification grâce à un module de sécurité **caractérisé par** les étapes suivantes :

   - Alimentation (110, 120) d'un transfichier journal accessible pour un module de sécurité (11), le module de sécurité (11) communiquant avec au moins un analyseur de transfichier journal (20),
   - Mise à disposition (112) d'au moins une valeur de sécurité initiale codée sous forme de texte chiffré $H_{Z,0}$ par le module de sécurité (11) et formation subséquente (117) d'une valeur de sécurité actuelle $h_{Z,1}$ à partir de la valeur de sécurité initiale $h_{Z,0}$ selon une première fonction mathématique également utilisée par l'analyseur de transfichier journal, ladite fonction permettant une déduction d'une pluralité de valeurs de sécurité subséquentes $h_{Z,1}$ $h_{Z,2}$, ..., $h_{Z,K}$, .... $h_{Z,V}$ dans le but de sécuriser et de vérifier les enregistrements en temps réel survenant ultérieurement {#K,R,Entry$_{Z,K}$},
   - Listage desdits enregistrements en temps réel {#K,R,Entry$_{Z,K}$} pour des transactions étant chacune listée dans le transfichier journal correspondant à un relevé de compteur séquentiel #K, reconnaissable en tant qu'enregistrement en temps réel par un indicateur R et **caractérisée par** les données de transaction Entry$_{Z,K}$, une valeur de sécurité subséquente pour une transaction survenant ultérieurement étant ainsi formée (117),
   - Création (122) d'un code d'authentification $T_{Z,K}$ pour chaque enregistrement en temps réel {#K,R,Entry$_{Z,K}$} grâce au module de sécurité (11), par l'utilisation de l'enregistrement en temps réel {#K,R, Entry$_{Z,K}$} et de la valeur de sécurité actuelle ($h_{Z,K}$) dans un algorithme également utilisé par l'analyseur de transfichier journal avec une deuxième fonction mathématique pour le code d'authentification $T_{Z,K}$,

- Protection (123) de chaque enregistrement en temps réel {#K,R, Entry$_{Z,K}$} par attachement du code d'authentification T$_{Z,K}$ et
- Sauvegarde de chaque enregistrement en temps réel non-codé protégé par le code d'authentification sous la forme d'un jeu de données D2.

2. Dispositif selon la revendication 1 **caractérisé en ce que** la mise à disposition d'au moins une des valeurs de sécurité initiales codées sous forme de texte chiffré (H$_{Z,0}$) comporte une sauvegarde d'un enregistrement en non-temps-réel incluant au moins l'un des textes chiffrés (H$_{Z,0}$) pour au moins l'un des analyseurs de transfichier journal (20).

3. Dispositif selon la revendication 2 **caractérisé en ce que** ladite mise à disposition inclut une transmission de l'enregistrement en non-temps-réel sous la forme d'un premier jeu de données (D1) vers l'analyseur de transfichier journal (20).

4. Dispositif selon la revendication 2 **caractérisé en ce qu'**un enregistrement en non-temps-réel prédéterminé sous la forme d'un premier jeu de données (D1) est enregistré au niveau de l'analyseur de transfichier journal (20) conforme aux dispositions.

5. Dispositif selon la revendication 1 **caractérisé en ce que**, lors de la sauvegarde, ledit enregistrement en temps réel protégé par le code d'authentification est enregistré sous forme d'un deuxième jeu de données (D2) pour un analyseur de transfichier journal (20) de manière lisible et en temps réel, et **en ce que** ledit enregistrement en temps réel est transmis sous forme du deuxième jeu de données (D2) à l'analyseur de transfichier journal (20).

6. Dispositif selon la revendication 1 **caractérisé en ce que** la mise à disposition d'au moins une des valeurs de sécurité initiales codées sous forme de texte chiffré (H$_{Z,0}$) comporte, lors de l'encodage de la valeur initiale de sécurité (h$_{Z,0}$), une première opération (N-OPERATION) avec un dispositif de cryptage asymétrique, en liaison avec la formation d'un enregistrement en non-temps-réel.

7. Dispositif selon la revendication 1 **caractérisé en ce que** la création d'un code d'authentification pour chaque enregistrement en temps réel se réalise dans une deuxième opération (R-OPERATION) du module de sécurité (11) et **en ce que** la deuxième fonction mathématique constitue une fonction de hash qui est appliquée à l'enregistrement en temps réel avec la valeur de sécurité actuelle attachée (h$_{Z,K}$), formant ainsi un code d'authentification (T$_{Z,K}$).

8. Dispositif selon la revendication 1 **caractérisé en ce que** la valeur de sécurité actuelle (h$_{Z,K}$) constitue une valeur de hash, et **en ce que** la première fonction mathématique est une fonction de hash.

9. Dispositif selon la revendication 1 **caractérisé en ce qu'**une valeur de sécurité actuelle subséquente (h$_{z,1}$) est formée à partir de la valeur de sécurité initiale (h$_{Z,0}$) au moyen d'une première fonction mathématique également utilisée par l'analyseur de transfichier journal, la valeur de sécurité initiale (h$_{Z,0}$) étant attachée à l'enregistrement en temps réel (#K,R,Entry$_{z,K}$) et la première fonction mathématique étant une fonction de hash qui est appliquée à l'enregistrement en temps réel avec la valeur de sécurité initiale attaché (h$_{Z,0}$).

10. Système muni d'un module de sécurité pour la sauvegarde en temps réel haute sécurité anti-falsification, dans un transfichier journal servant à effectuer des sauvegardes historiques de toutes les données de transactions, **caractérisé en ce que** le module de sécurité (11) comporte une mémoire pour la mémorisation non-volatile de résultats intermédiaires et de codes, et comporte un moyen permettant de réaliser une opération en non-temps-réel avec la création d'un premier jeu de données (D1) et pour la réalisation d'au moins une opération en temps réel avec création d'au moins un deuxième jeu de données (D2), ladite mémoire étant prévue pour la mise en mémoire non-volatile d'une valeur de sécurité actuelle (h$_{Z,K}$) et d'un algorithme également utilisé dans au moins un analyseur de transfichier journal (20, 30) avec une première et une deuxième fonction mathématique, ledit moyen étant programmé pour générer chaque valeur de sécurité actuelle (h$_{Z,K}$) à partir d'une valeur de sécurité initiale ou précédente selon l'algorithme avec la première fonction mathématique, et pour créer un code d'authentification (T$_{Z,K}$) à partir de l'enregistrement en temps réel et chaque valeur de sécurité actuelle (h$_{Z,K}$) correspondant à un enregistrement en temps réel, selon l'algorithme avec la deuxième fonction mathématique, et **en ce que** le module de sécurité (11) comporte un moyen de mise à disposition des jeux de données (D1, D2) pour une transmission à au moins un des analyseurs de transfichier journal (20, 30).

**11.** Système selon la revendication 10 **caractérisé en ce que** le module de sécurité (11) constitue un élément d'un système-client (10), ledit système étant relié à une pluralité d'analyseurs de transfichier journal autorisés (20, 30) via une liaison de communication (28), le module de sécurité (11) étant pourvu des clés de cryptage publiques ($ek_{B20}$, $ek_{B30}$) des analyseurs de transfichier journal (20, 30), avec lesquelles une valeur de hash initiale ($h_{Z,K}$) est codée, et **en ce que** le module de sécurité (11) est programmé dans le but de transmettre finalement au moins un enregistrement en non-temps-réel sous la forme d'un jeu de données (D1) de chaque opération en non-temps-réel aux analyseurs de transfichier journal concernés, l'enregistrement en non-temps-réel comportant chaque fois la valeur de hash initiale ($h_{Z,0}$) sous forme codée.

**12.** Système selon les revendications 10 à 11 **caractérisé en ce que** le module de sécurité (11) est relié à une interface de communication (17) d'un système-client (10) via un tampon de communication (13), **en ce que** le module de sécurité (11) comporte une mémoire, pour au moins la mémorisation d'une clé de cryptage publique ($ek_{B20}$, $ek_{B30}$) mise à disposition par au moins un analyseur de transfichier journal à distance (20, 30), d'une clé de signature privée ($sk_{SM}$) du module de sécurité (11) et d'une valeur de hash actuelle ($h_{Z,K}$) et pour la mémorisation de l'algorithme avec la première et la deuxième fonction mathématique, **en ce que** le module de sécurité (11) comprend des moyens programmables, afin de générer un nombre aléatoire ou la valeur de hash initiale ($h_{Z,0}$) et coder ce dernier avec au moins une clé de cryptage publique ($ek_{B20}$, $ek_{B30}$) en au moins un texte chiffré, former au moins un enregistrement en non-temps-réel incluant le texte chiffré, créer une signature digitale (sig) correspondant à au moins un enregistrement en non-temps-réel et créer un code d'authentification ($T_{Z,K}$) correspondant à un enregistrement en temps réel, la valeur de hash actuelle ($h_{Z,K}$) étant chaque fois générée à partir de la valeur de hash initiale ($h_{Z,K}$) ou de la valeur de hash précédente ($h_{Z,K-1}$) selon l'algorithme avec la première fonction mathématique, et le code d'authentification ($T_{Z,K}$) étant créé à partir de l'enregistrement en temps réel et de chacune des valeurs de hash actuelles ($h_{Z,K}$) selon l'algorithme avec la deuxième fonction mathématique, **en ce que** le module de sécurité (11) est programmé pour entrer en temps réel dans une communication avec au moins l'un des analyseurs de transfichier journal à distance (20, 30), lors d'une sauvegarde d'enregistrements en temps réel protégés par chacun des codes d'authentification ($T_{Z,K}$) actuels dans une granularité fine, toutes les données de transaction sous forme de jeux de données (D1, D2) à sauvegarder étant transmises dans le tampon de communication (13) et de là, via une liaison électrique appropriée (14), jusqu'à l'interface de communication (17) et de là, via une interface de communication à distance (27, 37) jusqu'au tampon de communication (23, 33) de l'analyseur de transfichier journal à distance (20, 30).

**13.** Système selon les revendications 10 à 11 **caractérisé en ce que** le module de sécurité (11) est programmé dans le but de,

- répéter l'opération en non-temps-réel correspondant à la pluralité d'analyseurs de transfichier journal autorisés, le nombre aléatoire ou la valeur de hash initiale ($h_0$) étant codé(e) par différentes clés de cryptage publiques ($ek_{B20}$, $ek_{B30}$), afin de mettre à disposition à chaque fois une valeur de sécurité initiale codée en texte chiffré pour les analyseurs de transfichier journal (20, 30), dans les enregistrements en non-temps-réel d'un jeu de données (D1),
- protéger l'enregistrement en non-temps-réel d'un jeu de données (D1) avec la signature digitale (sig), créée par la clé de signature privée ($sk_{SM}$) du module de sécurité (11) et par les enregistrements en non-temps-réel d'un jeu de données (D1), de telle manière que chaque enregistrement en non-temps-réel peut être vérifié grâce à une clé de vérification publique ($vk_{SM}$) du module de sécurité (11) par des analyseurs de transfichier journal (20, 30), et que la valeur de sécurité initiale protégée reçue sous forme de texte chiffré peut être décodée par les analyseurs de transfichier journal à distance (20, 30) grâce à une clé de décryptage privée ($dk_{B20}$, $dk_{B30}$) en valeur de hash initiale ($h_{Z,0}$) ou en nombre aléatoire,
- créer la valeur de hash actuelle ($h_{Z,K}$) selon un algorithme avec la première fonction mathématique et
- protéger un enregistrement en temps réel d'un jeu de données (D2) dans le cadre d'une opération en temps réel avec un code d'authentification, dans lequel la valeur de hash actuelle ($h_{Z,K}$) intervient, de telle manière qu'une seule et même sauvegarde en temps réel protégée peut être exploitée par la pluralité d'analyseurs de transfichier journal autorisés (20, 30).

**14.** Système selon les revendications 10 à 12 **caractérisé en ce que** le module de sécurité (11) est relié, via un bus (12), au tampon de communication (13), ce dernier étant relié à l'interface de communication (17) du système-client (10) via une liaison électrique appropriée (14), **en ce que** l'interface de communication (17) du système-client (10) est reliée, via la liaison de communication (28), avec au moins une interface de communication (27, 37) d'au moins un des analyseurs de transfichier journal (20, 30), **en ce que** ce dernier comporte une liaison électrique appropriée (24, 34) allant de l'interface de communication (27, 37) au tampon de communication (23, 33) de l'analyseur de transfichier journal (20, 30), **en ce qu'**une boîte de sécurité (21, 31) est reliée au tampon de communication (23, 33) via un bus (22, 32), **en ce que**, dans la boîte de sécurité (21, 31), une clé de décryptage privée ($dk_{B20}$, $dk_{B30}$) de la boîte de sécurité (21, 31), une clé de vérification publique ($vk_{SM}$) du module de sécurité, une valeur de hash actuelle ($h_{Z,K}$) et un algorithme de la première et deuxième fonction mathématique sont enregistrés de manière non-volatile, **en ce que** la boîte de sécurité (21, 31) est pourvue de moyens servant à mettre à jour la valeur de hash enregistrée de manière non-volatile ($h_{Z,K}$) et à créer un code de comparaison, afin de pouvoir ainsi et au moyen du code d'authentification contrôler l'authenticité de la sauvegarde en temps réel correspondante et d'en éditer un rapport de vérification (25).

**15.** Système selon les revendications 10 à 14 **caractérisé en ce qu'**une pluralité de systèmes-clients (10), chacun étant pourvu d'un module de sécurité (11), est reliée via un réseau de communication (28) à une pluralité d'analyseurs de transfichier journal autorisés (20, 30).

**16.** Système selon les revendications 10 à 15, **caractérisé en ce qu'**un système-client (10) constitue une machine à affranchir munie du module de sécurité (11).

**17.** Système selon les revendications 10 à 16, **caractérisé en ce que** le module de sécurité (11) d'un système-client (10) dote les enregistrements en non-temps-réel avant leur répartition à tous les analyseurs de transfichier journal (20, 30), de toutes les informations, ces dernières étant adaptées de manière à ce que la boîte de sécurité de chacun des analyseurs de transfichier journal (20, 30) recherche l'élément qui lui est approprié, et l'identification d'envoi du systéme-client (10) étant contenue dans chaque partie transmise d'un transfichier journal.

**18.** Système selon la revendication 17 **caractérisé en ce que**, dans le cas d'une transmission successive, enregistrement en non-temps-réel par enregistrement en non-temps-réel, dans le premier jeu de données (D1), l'identification de l'émetteur se trouve dans le champ d'entrée de chaque enregistrement en non-temps-réel.

**19.** Système selon les revendications 10 à 11 **caractérisé en ce que** le module de sécurité (11) d'un système-client (10) regroupe les enregistrements en non-temps-réel individuellement pour chaque analyseur de fichier journal.

**20.** Système selon la revendication 10 **caractérisé en ce que** le module de sécurité (11) fait partie d'un serveur (10'), ledit serveur étant relié via une liaison de communication (28') à une pluralité d'analyseurs de transfichier journal autorisés (20, 30), **en ce que** le module de sécurité (11) comporte une mémoire pour la mémorisation des clés de cryptage publiques ($ek_{B20}$, $ek_{B30}$) des analyseurs de transfichier journal (20, 30), avec lesquels une valeur de hash initiale ($h_{Z,K}$) est codée, et **en ce que** le module de sécurité (11) est programmé dans le but de transmettre finalement au moins un enregistrement en non-temps-réel sous forme d'un jeu de données (D1) de chaque opération en non-temps-réel aux analyseurs de transfichier journal concernés (20, 30), l'enregistrement en non-temps-réel comprenant à chaque fois la valeur de hash initiale ($h_{Z,0}$) sous forme codée.

EP 1 278 332 B1

**Fig. 1**

Diagram — BESTIMMUNGSORT:
- SCHLÜSSEL-QUELLE (ek, dk)
- PRIVATER SCHLÜSSEL dk
- ENTSCHLÜSSELN: m´ ← decrypt(dk,c)
- m´ = m

Mittlere Beschriftungen:
- ÖFFENTLICHER SCHLÜSSEL ek
- AUTHENTISCHER KANAL
- CHIFFRIERTEXT c
- UNGESICHERTER KANAL

ABSENDEORT:
- VERSCHLÜSSELN: c ← encrypt(dk,c)
- KLARTEXT m

**Fig. 2**

Diagram — BESTIMMUNGSORT:
- VERIFIZIEREN: verify (vk, m, sig) acc ←

Mittlere Beschriftungen:
- ÖFFENTLICHER SCHLÜSSEL vk
- AUTHENTISCHER KANAL
- TEXT & SIGNATUR m sig
- UNGESICHERTER KANAL

ABSENDEORT:
- SCHLÜSSELQUELLE (sk, vk)
- PRIVATER SCHLÜSSEL sk
- SIGNIEREN: sig ← sign(sk,m)
- KLARTEXT m

**Fig. 3**

Diagram:
- SICHERHEITSMODUL: $sk_{SM}$, $vk_{SM}$; $ek_B$ ;
- AUTHENTISCHER KANAL
- SICHERHEITSBOX: $ek_B$, $dk_B$; $vk_{SM}$;

Fig. 4

Fig. 7

Fig. 5

Fig. 8

**120** ◇3

| |
|---|
| Bilde einen Datensatz `HASHINPUT´← {#K, R, Entry$_{Z,K}$, h$_{Z,K}$} — 121 |
| Berechne Authentisierungscode: T$_{Z,K}$ hash (HASHINPUT), — 122 |
| Ausgabe eines Datensatzes: D2 ← {#K, R, Entry$_{Z,K}$, T$_{Z,K}$ }, — 123 |
| Bilde h$_{Z,(K+1)}$ ← hash(h$_{Z,K}$), — 124 |
| K ← K + 1, — 125 |

◇4

**Fig. 6**

**220** ◇7

| |
|---|
| Separiere #K, R, Entry$_{Z,K}$ aus dem auszuwertenden Datensatz D2 — 221 |
| Bilde Vergleichsdatensatz: HASHINPUT*← {#K,R,Entry$_{Z,K}$,h$_{Z,K}$} — 222 |
| Bilde Vergleichs-Tag: T$_{Z,K}$* ← hash(HASHINPUT*) — 223 |
| T$_{Z,K}$* = T$_{Z,K}$ Verifikation, — 224 |
| Nutzdaten Entry$_{Z,K}$ auswerten, — 225 |
| Bilde h$_{Z,(K+1)}$ ← hash(h$_{Z,K}$), — 226 |
| K ← K + 1, — 227 |

◇8

**Fig. 9**

Fig. 10